(19)

Europäisches
Patentamt
European
Patent Office
Office européen
des brevets

(11) **EP 4 718 826 A2**

(12) **EUROPEAN PATENT APPLICATION**
published in accordance with Art. 153(4) EPC

(43) Date of publication:
**01.04.2026  Bulletin 2026/14**

(21) Application number: **24832182.0**

(22) Date of filing: **25.03.2024**

(51) International Patent Classification (IPC):
**H04M 1/02** *(2006.01)*      **H02K 7/116** *(2006.01)*

(52) Cooperative Patent Classification (CPC):
**H02P 6/08; H04M 1/0237;** H04M 1/0268

(86) International application number:
**PCT/KR2024/003715**

(87) International publication number:
**WO 2025/005397 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **30.06.2023  KR 20230084828**
          **27.07.2023  KR 20230098555**

(71) Applicant: **Samsung Electronics Co., Ltd.**
**Suwon-si, Gyeonggi-do 16677 (KR)**

(72) Inventors:
• **KANG, Hyunggwang**
  **Suwon-si Gyeonggi-do 16677 (KR)**
• **GIL, Taeho**
  **Suwon-si Gyeonggi-do 16677 (KR)**
• **KIM, Moonsun**
  **Suwon-si Gyeonggi-do 16677 (KR)**

• **KIM, Taewoo**
  **Suwon-si Gyeonggi-do 16677 (KR)**
• **YOO, Changhee**
  **Suwon-si Gyeonggi-do 16677 (KR)**
• **JEONG, Hoyoung**
  **Suwon-si Gyeonggi-do 16677 (KR)**
• **CHO, Hyoungtak**
  **Suwon-si Gyeonggi-do 16677 (KR)**
• **LEE, Soyoung**
  **Suwon-si Gyeonggi-do 16677 (KR)**
• **LEE, Wonho**
  **Suwon-si Gyeonggi-do 16677 (KR)**
• **JANG, Seokmin**
  **Suwon-si Gyeonggi-do 16677 (KR)**

(74) Representative: **HGF**
**HGF Limited**
**4th Floor, 1 City Square**
**Leeds LS1 2ES (GB)**

(54) **ELECTRONIC DEVICE COMPRISING DRIVING MECHANISM**

(57)     This electronic device comprises: a housing including a first housing part and a second housing part, which can move relative to the first housing part; a driving mechanism for providing driving force for moving the second housing part; and a processor. The processor is configured to: identify, in a state in which the first housing part and the second housing part are stationary, an external force causing movement; and, on the basis of the identified external force, control the driving mechanism such that the state in which the first housing part and the second housing part are stationary is maintained.

101

| FIRST SENSOR (510) | | PROCESSOR (120) | MOTOR DRIVER IC (540) | BATTERY (189) |
| SECOND SENSOR (520) | | | | MOTOR (361) |
| THIRD SENSOR (530) | | | | ENCODER (550) |

FIG. 5A

**EP 4 718 826 A2**

Description

[Technical Field]

The present disclosure relates to an electronic device including a driving mechanism.

[Background Art]

An electronic device including a large-screen display may enhance user utilization. As demand for highly portable electronic devices increases, an electronic device may include a deformable display. The deformable display may be slidably deformable. The electronic device may include a driving mechanism for deforming a display. The driving mechanism may include a motor, a lack gear, and/or a pinion gear. When the driving mechanism is driven, a structure of a housing supporting the display is deformed, so that the display may be deformed.

The above-described information may be provided as a related art for the purpose of helping to understand the present disclosure. No claim or determination is raised as to whether any of the above-described information may be applied as a prior art related to the present disclosure.

[Disclosure]

[Technical Solution]

An embodiment of an electronic device is provided. The electronic device includes a housing, a driving mechanism, memory, and a processor. The housing includes a first housing part and a second housing part movably coupled to the first housing part and relatively movable with respect to the first housing part. The driving mechanism is configured to provide a driving force for moving the second housing part. The memory includes one or more storage media which store instructions. The processor includes processing circuitry. The instructions, when executed by the processor, cause the electronic device to identify external force causing a relative movement of the second housing part with respect to the first housing part, in a stationary state in which the first housing part and the second housing part are stationary. The instructions, when executed by the processor, cause the electronic device to control the driving mechanism, based on the identified external force, so that the first housing part and the second housing part remain the stationary state.

An embodiment of a method of operating an electronic device is provided. The method includes identifying external force causing a relative movement of a second housing part of the electronic device with respect to a first housing part of the electronic device, in a stationary state in which the first housing part and the second housing part are stationary. The method further includes controlling a driving mechanism of the electronic device in a way such that the first housing part and the second housing part remain the stationary state, based on the identified external force.

[Description of the Drawings]

The above and other features of embodiments of the disclosure will become more apparent by describing in further detail embodiments thereof with reference to the accompanying drawings.

FIG. 1 is a block diagram of an electronic device in a network environment according to an embodiment.

FIG. 2A is a top plan view of an embodiment of an electronic device in a first state.

FIG. 2B is a bottom view of an embodiment of an electronic device in a first state.

FIG. 2C is a top plan view of an embodiment of an electronic device in a second state.

FIG. 2D is a bottom view of an embodiment of an electronic device in a second state.

FIGS. 3A and 3B are exploded perspective views of an embodiment of an electronic device.

FIG. 4A is a cross-sectional view of an embodiment of an electronic device in a first state.

FIG. 4B is a cross-sectional view of an embodiment of an electronic device in a second state.

FIG. 5A is a block diagram of an embodiment of an electronic device.

FIG. 5B is a flowchart illustrating an example of an operation of an electronic device for driving a housing.

FIG. 5C is a flowchart illustrating an operation of an embodiment of an electronic device.

FIG. 6A illustrates an embodiment of a motor.

FIG. 6B illustrates an operation of an embodiment of a motor.

FIG. 6C is a graph illustrating signals provided from a plurality of hall sensors in an operation of a motor illustrated in FIG. 6B.

FIG. 6D is a graph illustrating a back electromotive force in an operation of a motor illustrated in FIG. 6B.

FIG. 7A is a flowchart illustrating an example of an operation of an electronic device for fixing a housing.

FIG. 7B illustrates an embodiment of an electronic device in an environment of use.

FIG. 8 is a flowchart illustrating an example of an operation of identifying that an electronic device is a stationary state.

FIG. 9A is a flowchart illustrating an example of an operation of an electronic device for fixing a housing.

FIG. 9B illustrates an embodiment of a driving mechanism.

FIG. 9C illustrates a state in which a motor is controlled to have a holding torque.

FIG. 10A is a cross-sectional view of an embodiment an electronic device taken along line C-C' of FIG. 2A.

FIG. 10B is a flowchart illustrating an example of an operation of identifying magnitude of a holding torque based at least in part on a temperature of a display.

FIGS. 11A, 11B, 11C, and 11D illustrate a posture of an embodiment of an electronic device.

FIG. 12 is a flowchart illustrating an example of an operation of identifying magnitude of a holding torque based at least in part on a posture of an electronic device.

FIG. 13A illustrates an embodiment of an electronic device displaying a visual object through a display.

FIG. 13B is a flowchart illustrating an example of an operation of an electronic device when external force is applied.

**[Mode for Invention]**

The invention now will be described more fully hereinafter with reference to the accompanying drawings, in which various embodiments are shown. This invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. Thus, reference to "an" element in a claim followed by reference to "the" element is inclusive of one element and a plurality of the elements. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

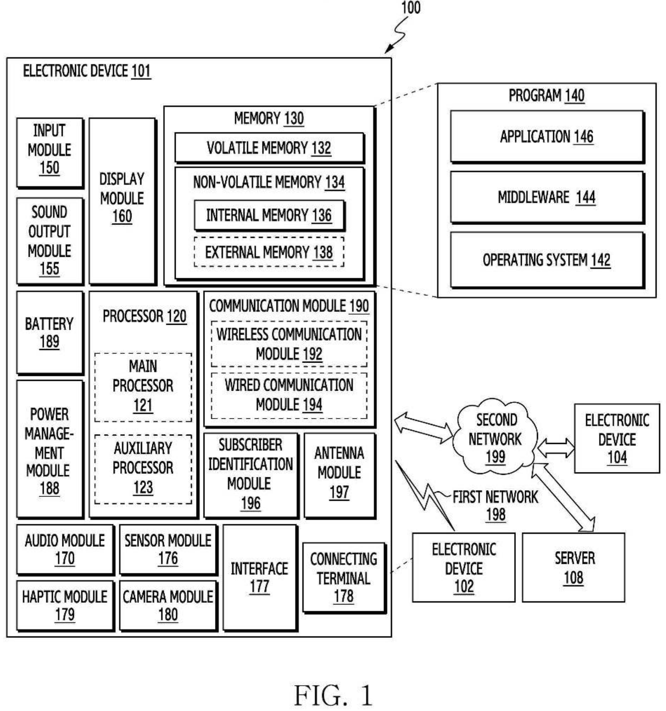

FIG. 1 is a block diagram illustrating an electronic device 101 in a network environment 100 according to various embodiments.

Referring to FIG. 1, an embodiment of the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabytes per second (Gbps) or more) for implementing eMBB, loss coverage (e.g., 164 dB or less) for implementing mMTC, or U-plane latency (e.g., 0.5 millisecond (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

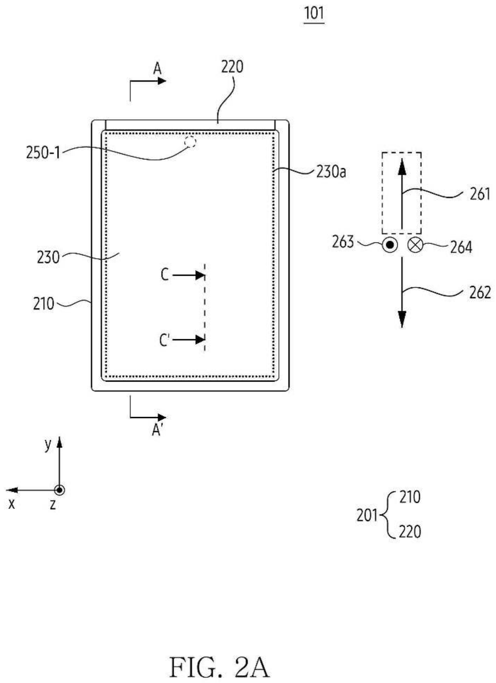

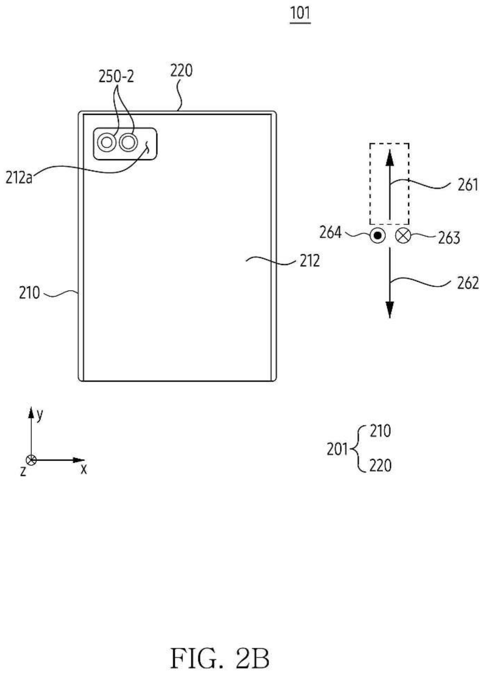

For example, a display of the display module 160 may be flexible. For example, the display may include a display area exposed outside a housing of the electronic device 101 that provides at least a portion of an outer surface of the electronic device 101. For example, since the display has flexibility, at least a portion of the display may be rollable into the housing or may be slidable into the housing. For example, a size of the display area may be changed according to a size of at least a portion of the display rolled into the housing or slid into the housing. For example, the electronic device 101 including the display may be in a plurality of states including a first state providing the display area having a first size and a second state providing the display area having a second size different from the first size. For example, the first state may be exemplified through a description of FIGS. 2A and 2B.

FIG. 2A is a top plan view of an embodiment of an electronic device in a first state.

Referring to FIG. 2A, an embodiment of an electronic device 101 may include a housing 201 including a first housing part 210 and a second housing part 220. For example, the housing 201 may include a first housing part 210, the second housing part 220 movable with respect to the first housing part 210 in a first direction 261 parallel to an y-axis or in a second direction 262 parallel to the y-axis and opposite to the first direction 261, and a display 230 (e.g., the display). Here, the first direction 261 may be a length direction of the electronic device 101. However, In another embodiment, for example, the second housing part 220 may be movable with respect to the first housing part 210 in opposing directions perpendicular to the first direction 261 parallel to an x-axis.

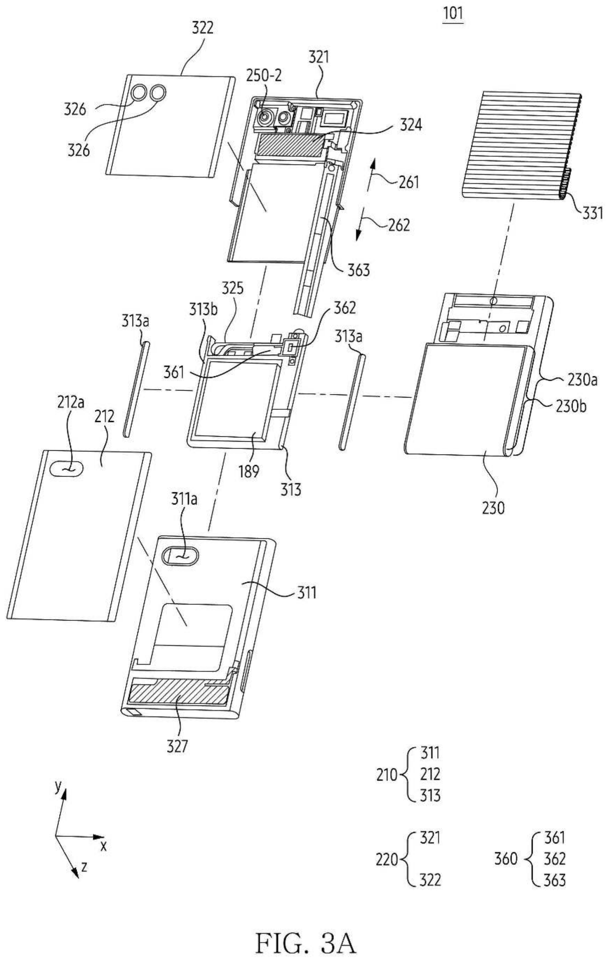

Hereinafter, an operation in which the second housing part 220 moves with respect to the first housing part 210 will be described, but it is not limited thereto. For example, the electronic device 101 may have a structure in which the overall size of the electronic device 101 may be changed according to a change in a relative positional relationship between the first housing part 210 and the second housing part 220. For example, the relative positional relationship between the first housing part 210 and the second housing part 220 may be changed by an operation of a driving mechanism (e.g., a driving mechanism 360 of FIG. 3A) to be described later. For example, by a driving mechanism 860, the first housing part 210 or the second housing part 220 may move, or both the first housing part 210 and the second housing part 220 may move.

For example, the electronic device 101 may be in the first state. For example, in the first state, the second housing part 220 may be movable with respect to the first housing part 210 in the first direction 261 of the first direction 261 and the second direction 262. For example, in the first state, the second housing part 220 may not be movable in the second direction 262 with respect to the first housing part 210.

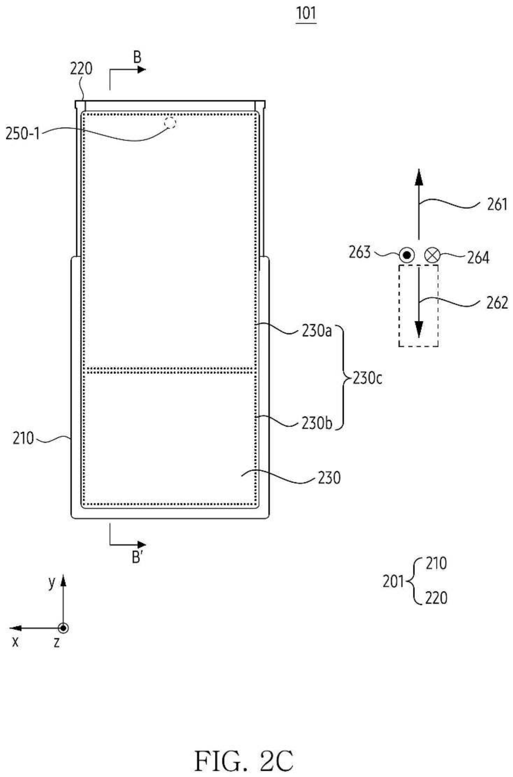

For example, in the first state, the display 230 may provide the display area having a smallest size. For example, in the first state, the display area may correspond to an area 230a shown in FIG. 2A. For example, although not illustrated in FIG. 2A, an area (e.g., an area 230b of FIG. 2C) of the display 230 different from the area 230a, which is the display area, may be included in the first housing part 210 in the first state. For example, in the first state, the area (e.g., the area 230b of FIG. 2C) may be covered by the first housing part 210. In the first state, the area may be rolled into the first housing part 210. For example, in the first state, the area 230a may include a planar portion. However, it is not limited thereto. For example, the area 230a may include a curved portion extending from the planar portion and positioned within an edge portion in the first state.

For example, the first state may be referred to as a slide-in state or a closed state in that at least a part of the second housing part 220 is located within the first housing part 210. For example, the first state may be referred to as a reduced state in terms of providing the display area having the smallest size. However, it is not limited thereto.

For example, the second housing part 220 may include a first image sensor 250-1 in a camera module 180, which is exposed through a portion of the area 230a and faces in a third direction 263 parallel to a z-axis. For example, although not illustrated in FIG. 2A, the second housing part 220 may include one or more second image sensors in the camera module 180, which are exposed through a portion of the second housing part 220 and face in a fourth direction 264 parallel to the z-axis and opposite to the third direction 263. For example, the one or more second image sensors may be illustrated through description of FIG. 2B.

FIG. 2B is a bottom view of an embodiment of an electronic device in a first state.

Referring to FIG. 2B, in an embodiment of an electronic device 101 in the first state, one or more second image sensors 250-2 disposed in the second housing part 220 may be positioned within a structure disposed in the first housing part 210 for one or more second image sensors 250-2. For example, light from the outside of the electronic device 101 may be received by one or more second image sensors 250-2 through the structure in the first state. For example, since one or more second image sensors 250-2 are positioned within the structure in the first state, the one or more second image sensors 250-2 may be exposed through the structure in the first state. For example, the structure may be implemented in various ways. For example, the structure may be an opening or a notch. For example, the structure may be an opening 212a in a first plate 212 of the first housing part 210 surrounding at least a part of the second housing part 220. However, it is not limited thereto. For example, in the first state, one or more second image sensors 250-2 included in the second housing part 220 may be covered by the first plate 212 of the first housing part 210.

In an embodiment, as described above with reference to FIG. 1, the first state may be changed to the second state.

For example, the first state (or the second state) may be changed to the second state (or the first state) through intermediate states between the first state and the second state.

For example, the first state (or the second state) may be changed to the second state (or the first state) based on a user input. For example, the first state (or the second state) may be changed to the second state (or the first state) in response to a user input to a physical button exposed through a portion of the first housing part 210 or a portion of the second housing part 220. For example, the first state (or the second state) may be changed to the second state (or the first state) in response to a touch input with respect to an executable object displayed in the display area. For example, the first state (or the second state) may be changed to the second state (or the first state) in response to a touch input having a contact point on the display area and a pressing strength greater than or equal to a reference strength. For example, the first state (or the second state) may be changed to the second state (or the first state) in response to a voice input received through a microphone of the electronic device 101. For example, the first state (or the second state) may be changed to the second state (or the first state) in response to external force applied to the first housing part 210 and/or the second housing part 220 to move the second housing part 210 with respect to the first housing part 210. For example, the first state (or the second state) may be changed to the second state (or the first state) in response to a user input identified in an external electronic device (e.g., earbuds or smartwatch) connected to the electronic device 101. However, it is not limited thereto.

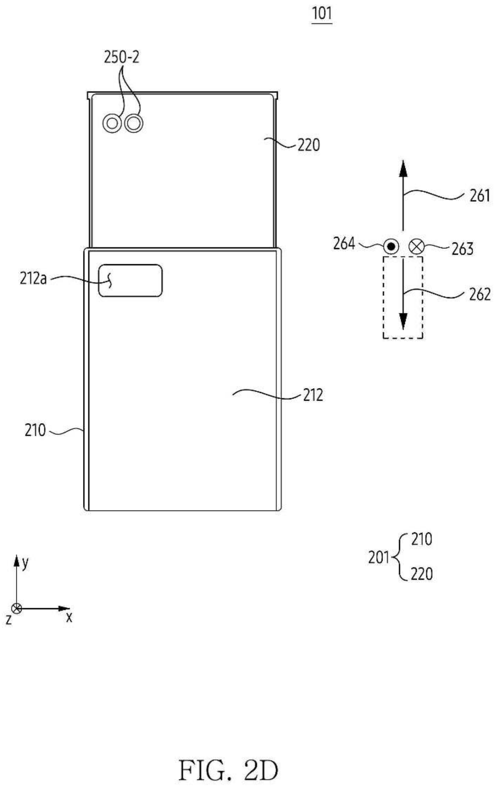

The second state may be illustrated through descriptions of FIGS. 2C and 2D.

FIG. 2C is a top plan view of an embodiment of an electronic device in a second state.

Referring to FIG. 2C, an embodiment of the electronic device 101 may be in the second state. For example, in the second state, the second housing part 220 may be movable with respect to the first housing part 210 in the second direction 262 of the first direction 261 and the second direction 262. For example, in the second state, the second housing part 220 may not be movable with respect to the first housing part 210 in the first direction 261.

For example, in the second state, the display 230 may provide the display area having the largest size. For example, in the second state, the display area may correspond to an area 230c including an area 230a and an area 230b. For example, the area 230b included in the first housing part 210 in the first state may be exposed in the second state. For example, in the second state, the area 230a may include a planar portion. However, it is not limited thereto. For example, the area 230a may include a curved portion extending from the planar portion and positioned in an edge portion. For example, in the second state, the area 230b may include a planar portion among the planar portion or a curved portion, unlike the area 230a in the first state. However, it is not limited thereto. For example, the area 230b may include a curved portion extending from the planar portion of the area 230b and positioned in an edge portion.

For example, the second state may be referred to as a slide-out state or an open state in that at least a part of the second housing part 220 to be disposed outside the first housing part 210 extends, with respect to the first state. For example, the second state may be referred to as an extended state in terms of providing the display area having the largest size. However, it is not limited thereto.

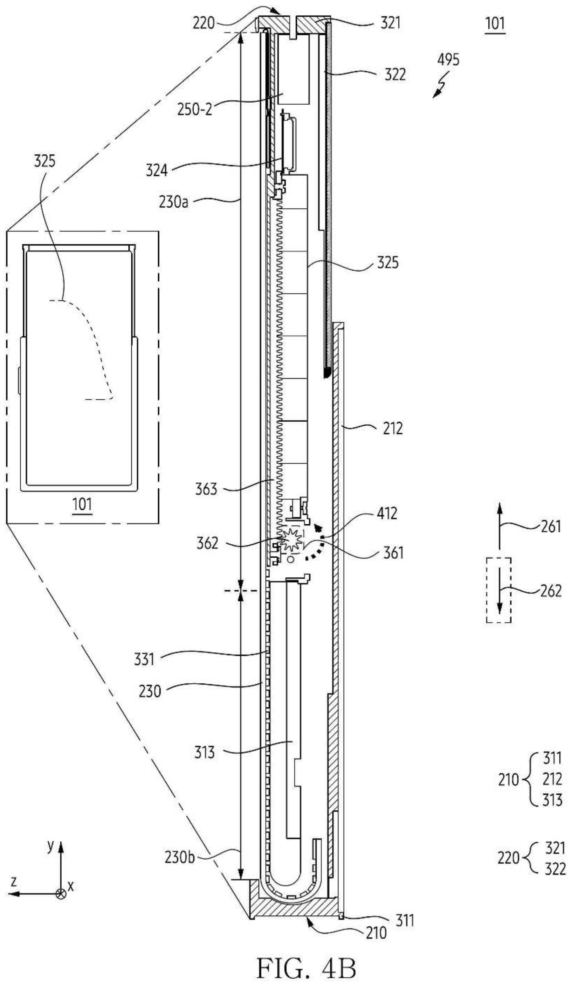

For example, when a state of the electronic device 101 is changed from the first state to the second state, the first image sensor 250-1 facing in the third direction 263 may be moved together with the area 230a, according to movement of the second housing part 220 in the first direction 261. For example, although not illustrated in FIG. 2C, when a state of the electronic device 101 is changed from the first state to the second state, one or more second image sensors 250-2 facing in the fourth direction 264 may be moved according to movement of the second housing part 220 in the first direction 261. For example, a relative positional relationship between one or more second image sensors 250-2 and the structure illustrated through description of FIG. 4B may change according to movement of the one or more second image sensors 250-2. For example, the change in the relative positional relationship may be illustrated through FIG. 2D.

FIG. 2D is a bottom view of an exemplary electronic device in a second state.

Referring to FIG. 2D, in the second state, one or more second image sensors 250-2 may be positioned outside the structure. For example, the structure may include an opening 212a. For example, in the second state, one or more second image sensors 250-2 may be positioned outside the opening 212a in the first plate 212. For example, one or more second image sensors 250-2 may be exposed through the opening 212a in the first state. For example, since one or more second image sensors 250-2 are positioned outside the first housing part 210 in the second state, one or more second image sensors 250-2 may be exposed in the second state. For example, since one or more second image sensors 250-2 are positioned outside the structure in the second state, the relative positional relationship in the second state may be different from the relative positional relationship in the first state.

For example, in a case where the electronic device 101 does not include the structure, such as the opening 212a, one or more second image sensors 250-2 may be exposed in the second state among the first state and the second state.

Although not illustrated in FIGS. 2A, 2B, 2C, and 2D, an embodiment of the electronic device 101 may be in an intermediate state between the first state and the second state. For example, a size of the display area in the intermediate state may be larger than a size of the display area in the first state and smaller than a size of the display area in the second state. For example, the display area in the intermediate state may correspond to an area, which includes a part of an area 230a and the area 230b. For example, in the intermediate state, a part of the area 230b may be exposed, and another part (or remaining part) of the area 230b may be covered by the first housing part 210 or rolled into the first housing part 210. However, it is not limited thereto.

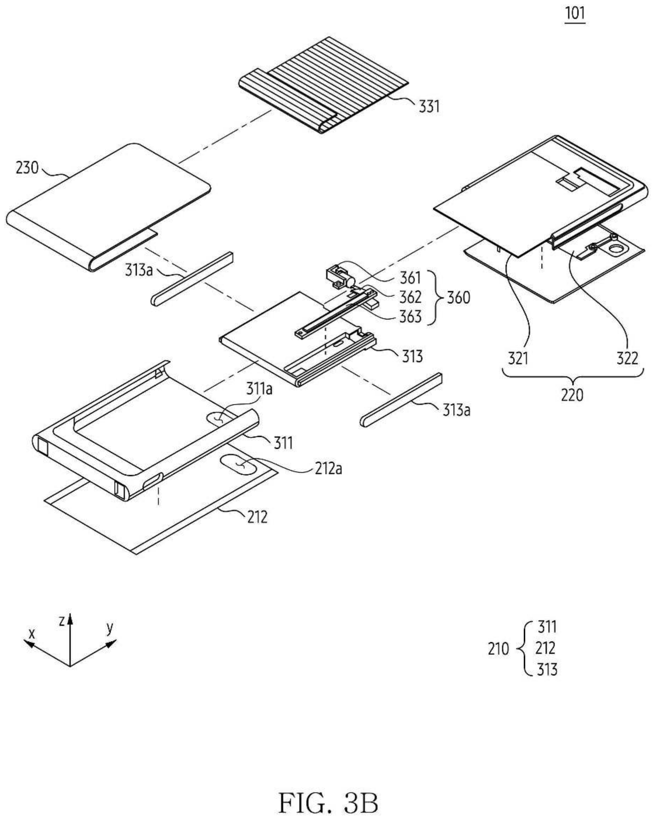

Referring back to FIG. 1, an embodiment of the electronic device 101 may include structures to move the second housing (e.g., the second housing part 220 of FIG. 2A) of the electronic device 101 with respect to the first housing (e.g., the first housing part 210 of FIG. 2A) of the electronic device 101. For example, the structures may be illustrated through descriptions of FIGS. 3A and 3B.

FIGS. 3A and 3B are exploded perspective views of an embodiment of an electronic device.

Referring to FIGS. 3A and 3B, an embodiment of an electronic device 101 may include a first housing part 210, a second housing part 220, a display 230, and a driving mechanism 360.

For example, the first housing part 210 may include a first cover 311, a first plate 212, and a frame 313.

For example, the first cover 311 may at least partially form a side surface portion of the outer surface of the electronic device 101. For example, the first cover 311 may include an opening 311a for one or more second image sensors 250-2. For example, the first cover 311 may include a surface supporting the first plate 212. For example, the first cover 311 may be coupled to the first plate 212. For example, the first cover 311 may include the frame 313. For example, the first cover 311 may be coupled to the frame 313.

For example, the first plate 212 may at least partially form a rear surface portion of the outer surface. For example, the first plate 212 may include an opening 212a for one or more second image sensors 250-2. For example, the first plate 212 may be disposed on the surface of the first cover 311. For example, the opening 212a may be aligned with the opening 311a.

For example, the frame 313 may be at least partially surrounded by the first cover 311.

For example, the frame 313 may be at least partially surrounded by the display 230. For example, the frame 313 is at least partially surrounded by the display 230, but a position of the frame 313 may be maintained independently of the movement of the display 230. For example, the frame 313 may be arranged in relation to at least a part of components of the display 230. For example, the frame 313 may include rails 313a providing (or guiding) a path of movement of at least one component of the display 230.

For example, the frame 313 may be coupled with at least one component of the electronic device 101. For example, the frame 313 may support a battery 189. For example, the battery 189 may be supported through a recess or a hole in a surface 313b of the frame 313. For example, the frame 313 may be coupled to an end of the flexible printed circuit board (FPCB) 325 on a surface of the frame 313. For example, although not explicitly illustrated in FIG. 3A and FIG. 3B, another end of the FPCB 325 may be connected to a PCB 324 through at least one connector. For example, the PCB 324 may be electrically connected to another PCB (not illustrated in FIGS. 3A and 3B) that supplies power to a motor 361 of the driving mechanism 360, through the FPCB 325.

For example, the frame 313 may be coupled with at least one structure of the electronic device 101 for a plurality of states including the first state and the second state. For example, the frame 313 may fasten the motor 361 of the driving mechanism 360.

For example, the second housing part 220 may include a second cover 321 and a second plate 322.

For example, the second cover 321 may be at least partially surrounded by the display 230. For example, the second cover 321 may be combined with at least a part of an area 230a of the display 230 surrounding the second cover 321, unlike the frame 313, so that the display 230 is moved according to a movement of the second housing part 220 with respect to the first housing part 210.

For example, the second cover 321 may be coupled with at least one component of the electronic device 101. For example, the second cover 321 may be coupled with a printed circuit board (PCB) 324 including components of the electronic device 101. For example, the PCB 324 may include a processor 120 (not illustrated in FIGS. 3A and 3B). For example, the second cover 321 may support one or more second image sensors 250-2.

For example, the second cover 321 may be coupled with at least one structure of the electronic device 101 for a plurality of states including the first state and the second state. For example, the second cover 321 may fix a rack gear 363 of the driving mechanism 360.

For example, the second cover 321 may be coupled to the second plate 322.

For example, the second plate 322 may be coupled to the second cover 321 to protect at least one component of the electronic device 101 coupled within the second cover 321 and/or at least one structure of the electronic device 101 coupled within the second cover 321. For example, the second plate 322 may include a structure for the at least one component. For example, the second plate 322 may include one or more openings 326 for one or more second image sensors 250-2. For example, one or more openings 326 may be aligned with one or more second image sensors 250-2 disposed on the second cover 321. For example, a size of each of the one or more openings 326 may correspond to a size of each of the one or more second image sensors 250-2.

For example, the electronic device 101 may include a support member 331 for supporting at least a part of the display 230. The support member 331 may include a plurality of bars. For example, the plurality of bars may be coupled with each other. The support member 331 may support an area 230b of the display 230.

For example, the driving mechanism 360 may include the motor 361, a pinion gear 362, and the rack gear 363.

For example, the motor 361 may operate based on power from the battery 189. For example, the power may be provided to the motor 361 in response to a user input.

For example, the pinion gear 362 may be coupled to the motor 361 through a shaft. For example, the pinion gear 362 may be rotated based on the operation of the motor 361 transmitted through the shaft.

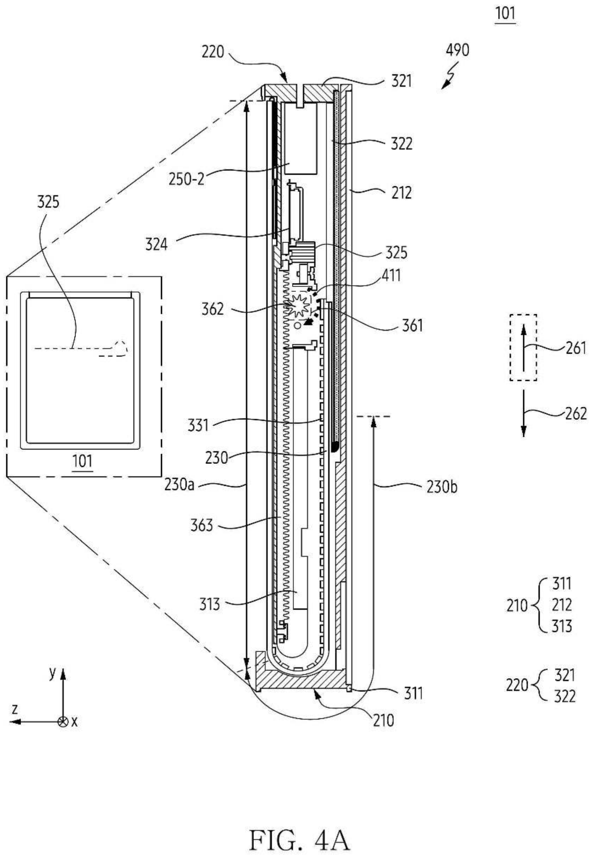

The rack gear 363 may be arranged in relation to the pinion gear 362. For example, teeth of the rack gear 363 may engage with teeth of the pinion gear 362. For example, the rack gear 363 may be moved in a first direction 261 or a second direction 262 according to the rotation of the pinion gear 362. For example, the second housing part 220 may be moved in the first direction 261 and the second direction 262, by the rack gear 363 moved according to the rotation of the pinion gear 362 due to the operation of the motor 361. For example, the first state of the electronic device 101 may be changed to a state (e.g., the one or more intermediate states or the second state) different from the first state through the movement of the second housing part 220 in the first direction 261. For example, the second state of the electronic device 101 may be changed to a state (e.g., the one or more intermediate states or the first state) different from the second state through the movement of the second housing part 220 in the second direction 262. For example, the change of the first state to the second state by the driving mechanism 360 and the change of the second state to the first state by the driving mechanism 360 may be illustrated through FIGS. 4A and 4B.

FIG. 4A is a cross-sectional view of an embodiment of an electronic device in a first state. FIG. 4B is a cross-sectional view of an embodiment of an electronic device in a second state.

Referring to FIGS. 4A and 4B, in an embodiment, a motor 361 may operate based at least in part on the defined user input received in a state 490, which is the first state. For example, a pinion gear 362 may be rotated in a first rotation direction 411, based at least in part on the operation of the motor 361. For example, a rack gear 363 may be moved in a first direction 261, based at least in part on the rotation of the pinion gear 362 in the first rotation direction 411. For example, since a second cover 321 in a second housing part 220 fixes the rack gear 363, the second housing part 220 may be moved in the first direction 261 based at least in part on the movement of the rack gear 363 in the first direction 261. For example, since the second cover 321 in the second housing part 220 is coupled with at least a part of an area 230a of a display 230 and fixes the rack gear 363, the display 230 may be moved based at least in part on the movement of the rack gear 363 in the first direction 261. For example, the display 230 may be moved along rails 313a. The shape of at least a part of a plurality of bars of a support member 331 of the display 230 may be changed when a state 490 is changed to a state 495, which is the second state.

For example, the area 230b of the display 230 may be moved according to the movement of the display 230. For example, when the state 490 is changed to the state 495 according to the defined user input, the area 230b may be moved through a space between the first cover 311 and the frame 313. For example, the area 230b in the state 495 may be exposed, unlike the area 230b rolled into the space in the state 490.

For example, since the second cover 321 in the second housing part 220 is coupled with the PCB 324 connected to another end of the FPCB 325 and fixes the rack gear 363, the shape of the FPCB 325 may be changed when the state 490 is changed to the state 495.

The motor 361 may be operated based at least in part on the defined user input received in the state 495. For example, the pinion gear 362 may be rotated in a second rotation direction 412 based at least in part on the operation of motor 361. For example, the rack gear 363 may be moved in the second direction 262 based at least in part on the rotation of the pinion gear 362 in the second rotation direction 412. For example, since the second cover 321 in the second housing part 220 fixes the rack gear 363, the second housing part 220 may be moved in the second direction 262 based at least in part on the movement of the rack gear 363 in the second direction 262. For example, since the second cover 321 of the second housing part 220 is coupled with at least a part of the area 230a of the display 230 and fixes the rack gear 363, the display 230 may be moved based at least in part on the movement of the rack gear 363 in the second direction 262. For example, the display 230 may be moved along the rails 313a. For example, the shape of at least a part of the plurality of bars of the support member 331 of the display 230 may be changed when the state 495 is changed to the state 490. The support member 331 may be moved with respect to the first housing part 210. The support member 331 accommodated within the first housing part 210 in the state 490 may be positioned between the first cover 311 and the frame 313. The display 230 may be moved with respect to the first housing part 210 according to the movement of the support member 331.

For example, the area 230b of the display 230 may be moved according to the movement of the display 230. For example, the area 230b may be moved through a space between the first cover 311 and the frame 313 when the state 495 is changed to the state 490 according to the defined user input. For example, the area 230b in the state 490 may be rolled into the space, unlike the area 230b exposed in the state 495.

For example, since the second cover 321 of the second housing part 220 is coupled with the PCB 324 connected to the other end of the FPCB 325 and fixes the rack gear 363, the shape of the FPCB 325 may be changed when the state 495 is changed to the state 490.

FIGS. 2A to 4B illustrate embodiments of the electronic device 101 in which a height of the display area is changed and a width of the display area is maintained when the first state (or the second state) is changed to the second state (or the first state) in a portrait mode, but is not limited thereto. For example, the electronic device 101 may be implemented by maintaining the height of the display area and changing the width of the display area when the first state (or the second state) is changed to the second state (or the first state) in the portrait mode.

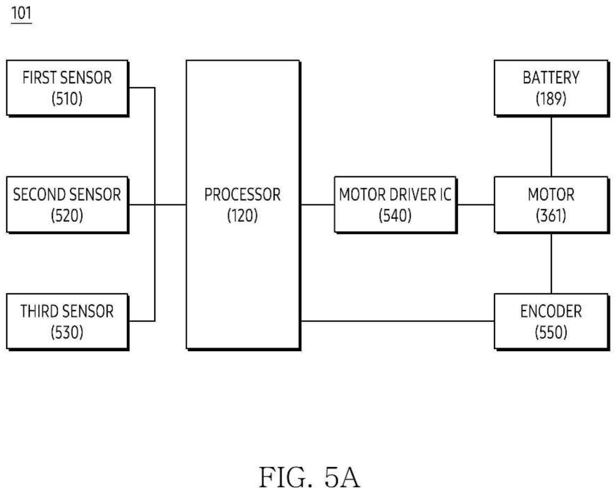

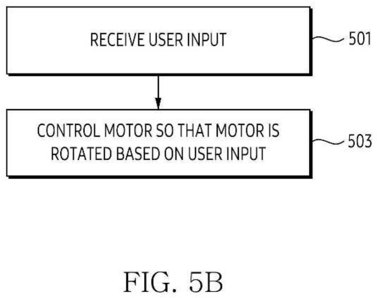

FIG. 5A is a block diagram of an embodiment of an electronic device. FIG. 5B is a flowchart illustrating an example of an operation of an electronic device for driving a housing.

One or more components to be described later with reference to FIG. 5A may be implemented together with the components of the electronic device 101 described with reference to FIGS. 2A to 4B. The same reference numerals are assigned to the same components as the above-described components, and any repetitive detailed descriptions thereof may be omitted.

Referring to FIG. 5A, an embodiment of the electronic device 101 may include a housing (e.g., the housing 201 of FIG. 2A), a driving mechanism 360 including a motor 361, memory 130, and a processor 120. In such an embodiment, the housing may correspond to the housing 201 described with reference to FIGS. 2A to 4B. For example, the housing 201 may include a first housing part (e.g., the first housing part 210 of FIG. 2A) and a second housing part (e.g., the second housing part 220 of FIG. 2A) movably coupled or fastened to the first housing part 210.

It would be understood that the blocks in each flowchart and combinations of the flowcharts may be performed by one or more computer programs which include computer-executable instructions. The memory 130 may include one or more storage media for storing the instructions.

Any of the functions or operations described herein can be processed by the processor 120 (e.g., one processor or a combination of processors). The one processor or the combination of processors is circuitry performing processing and includes circuitry like an application processor (AP, e.g., a central processing unit (CPU)), a communication processor (CP, e.g., a modem), a graphical processing unit (GPU), a neural processing unit (NPU) (e.g., an artificial intelligence (AI) chip), a wireless-fidelity (Wi-Fi) chip, a Bluetooth™ chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an IC, or the like.

The driving mechanism 360 including the motor 361 may provide a driving force for movement of the second housing part 220 with respect to the first housing part 210. For example, the motor 361 may operate based on power provided from a battery 189. For example, the motor 361 may be configured to provide a driving force for a movement of the second housing part 220 based on a user input set to move the second housing part 220. In an embodiment, the second housing part 220 may be moved with respect to the first housing part 210 within the present disclosure, but it is not limited thereto. For example, the housing 201 may have a structure in which the overall size of the housing 201 may be changed according to a change in a relative positional relationship between the first housing part 210 and the second housing part 220. For example, the relative positional relationship between the first housing part 210 and the second housing part 220 may be changed by an operation of the motor 361 to be described later. For example, by the motor 361, the first housing part 210 or the second housing part 220 may be movable, or both the first housing part 210 and the second housing part 220 may be movable.

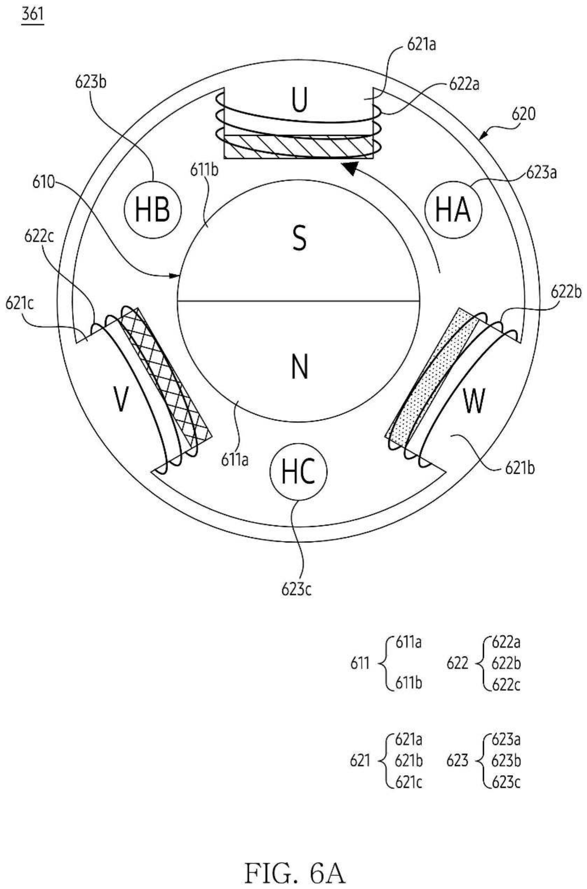

For example, the processor 120 may be configured to control the motor 361. For example, the electronic device 101 may include an encoder 550 and/or a motor driving mechanism integrated circuit (IC) 540 electrically connected to the processor 120 and the motor 361. The motor driver IC 540 may provide the motor 361 with a control signal for controlling the motor 361 by being controlled by the processor 120. For example, the processor 120 may provide the motor 361 with a pulse width modulation (PWM) signal for controlling a speed, a rotation direction, and/or torque of the motor 361, through the motor driver IC 540. The motor 361 may cause a rotation of the pinion gear (e.g., the pinion gear 362 of FIG. 4A), by operating based on the pulse width modulation signal. As the pinion gear 362 is rotated, a rack gear (e.g., the rack gear 363 of FIG. 4A) engaged with the pinion gear 362 is moved, the movement of the rack gear 363 may cause movement of the second housing part 220 (and/or the first housing part 210). For example, the encoder 550 may include a rotor (e.g., a rotor 610 of FIG. 6A), a stator (e.g., a stator 620 of FIG. 6A), and a plurality of hall sensors (e.g., a plurality of hall sensors 623 of FIG. 6A). The processor 120 may be configured to identify an operating state of a rotor 610 (e.g., a rotation direction and rotational speed of the rotor 610) through the encoder 550.

For example, the processor 120 may be configured to cause an operation of the motor 361 for a movement of the second housing part 220, based on a user input set for movement of the second housing part 220. As the second housing part 220 moves, the electronic device 101 may be changed to any one of a first state (e.g., the first state of FIG. 2A), a second state (e.g., the second state of FIG. 2B), and a plurality of intermediate states between the first state and the second state. The plurality of intermediate states may mean a state between the first state in which the overall size of the housing 201 is the minimum and the second state in which the overall size of the housing 201 is the maximum. For example, in the plurality of intermediate states, a size of the housing 201 may be larger than a size of the housing 201 in the first state and may be smaller than a size of the housing 201 in the second state.

Referring to FIG. 5B, in operation 501, a processor (e.g., the processor 120 of FIG. 5A) may receive a user input. The user input may be a user input set to drive a housing (e.g., the housing 201 of FIG. 2A). For example, the user input may be a user input for instructing the movement (e.g., slide-out or slide-in) of the second housing part (e.g., the second housing part 220 of FIG. 2A) with respect to the first housing part (e.g., the first housing part 210 of FIG. 2A).

The user input may include a user input from a physical button exposed through a part of the housing 201. For example, as a user presses the physical button, an electrical signal corresponding to the pressurized physical button is generated, and the generated electrical signal may be provided to the processor 120. As described above, the user input may be various. For example, the user input may include a touch input for an executable object displayed within the display area, a touch input having a contact point on the display area and a pressing strength greater than or equal to a reference strength, and/or a voice input received through a microphone. However, it is not limited thereto. The user input may be an intended external force applied to the first housing part 210 and/or the second housing part 220.

In operation 503, the processor 120 may control the motor 361 so that (or in way such that) the motor (e.g., the motor 361 of FIG. 5A) rotates based on a user input. For example, when the user input received in operation 501 is a user input for changing an electronic device (e.g., the electronic device 101 of FIG. 5A) from a first state to a second state, the processor 120 may control the motor 361 so that at least a part of the second housing part 220 is extracted from the first housing part 210 based on the user input. For example, when the user input received in operation 501 is a user input for changing the electronic device 101 from the second state to the first state, the processor 120 may control the motor 361 so that at least a part of the second housing part 220 is inserted into the first housing part 210 based on the user input. The motor 361 may operate based on power from the battery 189. When the motor 361 operates according to a user input, the motor 361 may operate by receiving power from the battery 189. For example, the power may be provided to the motor 361 based on a user input. The operation of the motor 361 based on a user input may be referred to as an operation to be performed based on power.

The operation illustrated in FIG. 5B may be an operation for driving the housing 201 in response to a user's input. For example, the user may provide a user input set to move the second housing part 220 to change a state of the electronic device 101. The processor 120 may provide a control signal to the motor 361 for the operation of the motor 361 corresponding to the user input, based on receiving an intended user input by the user. For example, the processor 120 may provide a control signal for a rotation of the motor 361, through a motor driver IC (e.g., the motor driver IC 540 of FIG. 5A). The motor 361 may perform an operation for moving the second housing part 220 based on the control signal.

A situation in which the second housing part 220 moves due to external force not intended by the user may occur. For example, the electronic device 101 may be used in the second state in which the second housing part 220 is extracted from the first housing part 210. For example, while the user uses a game application, the electronic device 101 may provide a large screen in the second state. When the user holds the electronic device 101 in the second state and uses the game application, the second housing part 220 may receive external force in a direction (e.g., the second direction 262 of FIG. 2B) toward the first housing part 210 by the user's hand. The motor 361 may have a force (e.g., a back drive force) acting as a load against the external force. Since the motor 361 is not rotated when the external force is smaller than the force, the second housing part 220 may be fixed without being moved. Since the motor 361 may be rotated by the external force when the external force is greater than the force, the second housing part 220 may be moved. When the second housing part 220 is moved by the external force, the motor 361 may be rotated. For example, in the second state, when the second housing part 220 is moved by the external force, the motor 361 may be rotated based on a direction in which the second housing part 220 moves. When the motor 361 is rotated by the external force, the motor 361 may be rotated regardless of power. For example, when the second housing part 220 is moved by an unintended external force, the motor 361 may be rotated by the external force without receiving power from the battery 189.

Since the external force is a force not intended by the user, the electronic device 101 may receive an intermittent and irregular external force. When the second housing part 220 is moved by the intermittent external force, a size of the housing 201 and a display area of a display (e.g., the display 230 of FIG. 2A) may be unintentionally changed. According to an embodiment, when the second housing part 220 is moved by external force not intended by the user, the electronic device 101 may control the motor 361 to fix a position of the second housing part 220.

For example, the processor 120 may control the motor 361 so that the motor 361 has a holding torque greater than external force. For example, when an unintended external force is applied to the housing 201, the processor 120 may be configured to control a current provided to the motor 361 so that the motor 361 may have a holding torque capable of resisting the external force. The holding torque may be referred to as a force that the motor 361 may resist against external force applied to the housing 201. For example, even when external force smaller than the holding torque is transmitted to the motor 361, the motor 361 is not rotated by the holding torque and may maintain a stationary state. For example, while the motor 361 has a holding torque greater than the external force, since the motor 361 does not rotate even when external force is applied to the housing 201, the second housing part 220 may be fixed without being moved by the external force. Since the second housing part 220 may be fixed by blocking the rotation of the motor 361 through a holding torque capable of controlling, the electronic device 101 may not include a mechanical structure (e.g., stopper) and an electrical structure (e.g., electronic brake) for fixing the second housing part 220. Since a position of the second housing part 220 may be effectively prevented from being changed unintentionally, the user may stably use the electronic device 101.

Referring back to FIG. 5A, an embodiment of an electronic device 101 may further include a first sensor 510, a second sensor 520, and/or a third sensor 530. For example, the first sensor 510 may be configured to obtain data related to movement of the second housing part 220 with respect to the first housing part 210. For example, the second sensor 520 may be configured to obtain data related to a temperature of at least a part (e.g., the display 230) of the electronic device 101. For example, the third sensor 530 may be configured to identify data related to a posture of the electronic device 101. The processor 120 may be operatively coupled to each of the first sensor 510, the second sensor 520, and/or the third sensor 530. For example, that the processor 120 is operatively coupled to each of the first sensor 510, the second sensor 520, and/or the third sensor 530 may indicate that the processor 120 is directly connected to each of the first sensor 510, the second sensor 520, and/or the third sensor 530. For example, that the processor 120 is operatively coupled to each of the first sensor 510, the second sensor 520, and/or the third sensor 530 may indicate that the processor 120 is connected to each of the first sensor 510, the second sensor 520, and/or the third sensor 530 through at least one other component. For example, the processor 120 may be configured to control the magnitude of a holding torque of the motor 361 using the first sensor 510, the second sensor 520, and/or the third sensor 530. Operations in which the processor 120 uses the first sensor 510, the second sensor 520, and/or the third sensor 530 will be described later.

Hereinafter, operations of the electronic device 101 for fixing the second housing part 220 by controlling the motor 361 will be described.

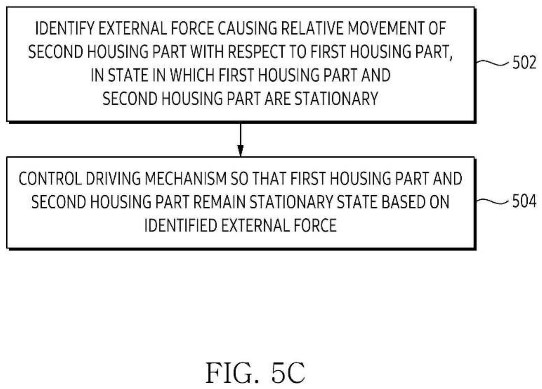

FIG. 5C is a flowchart illustrating an operation of an embodiment of an electronic device.

An operation illustrated in FIG. 5C may be referred to as an operation of controlling the driving mechanism 360 to resist external force not intended by the user.

In operation 502, the processor 120 may identify external force causing a relative movement of the second housing part 220 with respect to the first housing part 210, in a state in which the first housing part 210 and the second housing part 220 are stationary.

For example, the state in which the first housing part 210 and the second housing part 220 are stationary may refer to as a state in which the second housing part 220 is extracted from the first housing part 210 and the movement is completed. The stationary state may be identified through the first sensor 510 or may be identified based on at least one of power provided from the battery 189 to the driving mechanism 360.

For example, when a signal provided from the first sensor 510 to the processor 120 is less than the reference value for more (or longer) than a first reference time, the processor 120 may be configured to identify that the first housing part 210 and the second housing part 220 are in the stationary state. For example, when the second housing part 220 is moved with respect to the first housing part 210, the first sensor 510 may provide the processor 120 with a signal based on the movement. Since a signal provided from the first sensor 510 to the processor 120 is substantially absent in a stationary state where the movement of the second housing part 220 is substantially absent, the processor 120 may identify a stationary state based on that the signal is less than the reference value for more than the first reference time.

For example, when the movement of the second housing part 220 to the first housing part 210 is performed by the driving mechanism 360, power may be provided from the battery 189 to the driving mechanism 360. Since the operation of the driving mechanism 360 is stopped in the stationary state where the movement of the second housing part 220 is substantially absent, power provided (or supplied) from the battery 189 to the driving mechanism 360 may be substantially absent. The processor 120 may identify that the first housing part 210 and the second housing part 220 are in the stationary state when the power provided to the driving mechanism 360 is less than the reference value for more than the first reference time.

In operation 504, the processor 120 may control the driving mechanism 360 such that the first housing part 210 and the second housing part 220 remain (or are maintained in) the stationary state based on the identified external force.

For example, the processor 120 may control the driving mechanism 360 so that the motor 361 has a holding torque to resist the external force provided to the electronic device 101 to maintain the stationary state. For example, the motor 361 may include a coil 622 (shown in FIG. 6A). By adjusting a current applied to the coil 622, the motor 361 may have a holding torque for maintaining the stationary state. An operation of controlling by the driving mechanism 360 to maintain the stationary state will be described later.

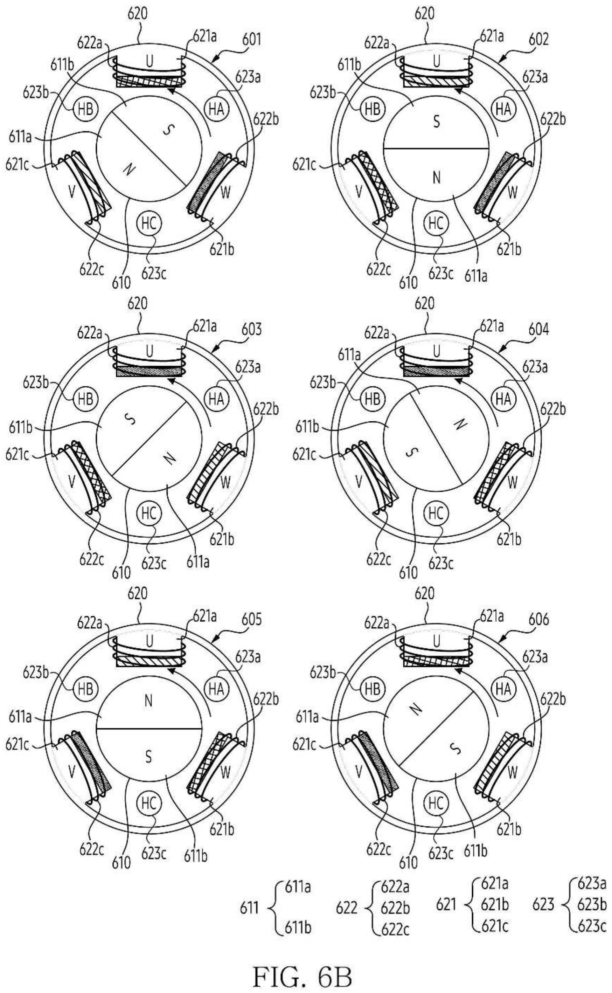

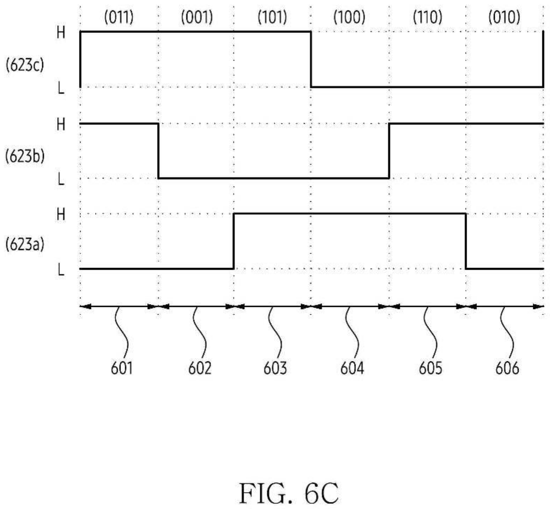

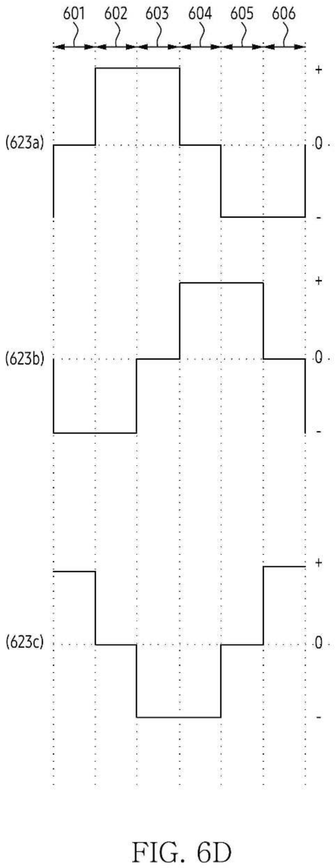

FIG. 6A illustrates an embodiment of a motor. FIG. 6B illustrates an operation of an embodiment of a motor. FIG. 6C is a graph illustrating signals provided from a plurality of hall sensors in an operation of a motor illustrated in FIG. 6B. FIG. 6D is a graph illustrating a back electromotive force in an operation of a motor illustrated in FIG. 6B.

For example, a motor 361 may include a brushless direct current (BLDC) motor. The BLDC motor may be referred to as a direct current (DC) motor without a brush for providing current to a commutator. The motor 361 may include a coreless BLDC motor without a metal core. Since the coreless BLDC motor does not have a brush physically contacting with the commutator, the coreless BLDC may reduce mechanical damage and be small and light. The coreless BLDC motors may have high output and low inertia moment, and enable detailed control. Since the coreless BLDC motor does not have a metal core, back drive force may be small.

Referring to FIG. 6A, an embodiment of the motor 361 may include a rotor 610, a stator 620, and a plurality of hall sensors 623. For example, the rotor 610 may include a permanent magnet 611. For example, the rotor 610 may include a first portion of the permanent magnet 611a having a first polarity (e.g., N-pole) (hereinafter, will be referred to as "first permanent magnet") and a second portion of permanent magnet 611b having a second polarity (e.g., S-pole) (hereinafter, will be referred to as "second permanent magnet"). For example, the stator 620 may include a plurality of teeth 621 on which the coil 622 is wound. For example, the stator 620 may include a first tooth 621a, a second tooth 621b, and/or a third tooth 621c, which are arranged at regular intervals along the outside of the rotor 610. For example, the first tooth 621a, the second tooth 621b, and/or the third tooth 621c may be spaced apart from each other at an interval of 120 degrees. For example, the stator 620 may include a first coil 622a wound around the first tooth 621a, a second coil 622b wound around the second tooth 621b, and/or a third coil 622c wound around the third tooth 621c. For example, the plurality of hall sensors 623 may include a first hall sensor 623a, a second hall sensor 623b, and/or a third hall sensor 623c. Although an embodiment of the motor 361 is illustrated as the BLDC motor capable of switching three phases in FIG. 6A, it is only an example and is not limited to the illustration in FIG. 6A. For example, the stator 620 may have three or more teeth.

For example, a processor (e.g., the processor 120 of FIG. 5A) may be configured to control the motor 361 by controlling a current provided to the coils 622 wound around the plurality of teeth 621. For example, the processor 120 may control the phase and timing of the current provided to the first coil 622a, the second coil 622b, and/or the third coil 622c so that the motor 361 rotates. For example, when a current is provided to the coil 622 in a first direction, the first polarity (e.g., N pole) may be formed at the end of the plurality of teeth 621 facing the rotor 610 by induction a magnetic field. For example, when a current is provided to the coil 622 in a second direction opposite to the first direction, the second polarity (e.g., S pole) may be formed at the end of the plurality of teeth 621 facing the rotor 610 by induction a magnetic field.

Referring to FIG. 6B, the motor 361 may be rotated based on the phase and timing of the current provided to the permanent magnet 611 and the coil 622 included in the rotor 610.

Referring to operation 601, a processor (e.g., the processor 120 of FIG. 5A) may control a motor driver IC (e.g., the motor driver IC 540 of FIG. 5A) so that a current is provided to the first coil 622a in a first direction and provided to the second coil 622b in a second direction. When a current is provided to the first coil 622a in the first direction, the first tooth 621a may form the first polarity. When a current is provided to the second coil 622b in the second direction, the second tooth 621b may form the second polarity. The first tooth 621a forming the first polarity may attract the second permanent magnet 611b of the rotor 610 by attraction and push the first permanent magnet 611a of the rotor 610 by repulsion. The second tooth 621b forming the second polarity may attract the first permanent magnet 611a of the rotor 610 by attraction and push the second permanent magnet 611b of the rotor 610 by repulsion. The rotor 610 may be rotated by the attraction and repulsion. Since a current is not provided to the third coil 622c, the third tooth 621c may not form a polarity.

Referring to operation 602, the processor 120 may control the motor driver IC 540 so that a current is provided to the second coil 622b in the second direction and provided to the third coil 622c in the first direction. When a current is provided to the second coil 622b in the second direction, the second tooth 621b may form the second polarity. When a current is provided to the third coil 622c in the first direction, the third tooth 621c may form the first polarity. The second tooth 621b forming the second polarity may attract the first permanent magnet 611a of the rotor 610 by attraction and push the second permanent magnet 611b of the rotor 610 by repulsion. The third tooth 621c forming the first polarity may attract the second permanent magnet 611b of the rotor 610 by attraction and push the first permanent magnet 611a of the rotor 610 by repulsion. The rotor 610 may be rotated by the attraction and repulsion. Since a current is not provided to the first coil 622a, the first tooth 621a may not form a polarity.

Referring to operation 603, the processor 120 may control the motor driver IC 540 so that a current is provided to the first coil 622a in the second direction and provided to the third coil 622c in the first direction. When a current is provided to the first coil 622a in the second direction, the first tooth 621a may form the second polarity. When a current is provided to the third coil 622c in the first direction, the third tooth 621c may form the first polarity. The first tooth 621a forming the second polarity may attract the first permanent magnet 611a of the rotor 610 by attraction and push the second permanent magnet 611b of the rotor 610 by repulsion. The third tooth 621c forming the first polarity may attract the second permanent magnet 611b of the rotor 610 by attraction and push the first permanent magnet 611a of the rotor 610 by repulsion. The rotor 610 may be rotated by the attraction and repulsion. Since a current is not provided to the second coil 622b, the first tooth 621a may not form a polarity.

Referring to operation 604, the processor 120 may control the motor driver IC 540 so that a current is provided to the first coil 622a in the second direction and provided to the second coil 622b in the first direction. When a current is provided to the first coil 622a in the second direction, the first tooth 621a may form the second polarity. When a current is provided to the second coil 622b in the first direction, the second tooth 621b may form the first polarity. The first tooth 621a forming the second polarity may attract the first permanent magnet 611a of the rotor 610 by attraction and push the second permanent magnet 611b of the rotor 610 by repulsion. The second tooth 621b forming the first polarity may attract the second permanent magnet 611b of the rotor 610 by attraction and push the first permanent magnet 611a of the rotor 610 by repulsion. The rotor 610 may be rotated by the attraction and repulsion. Since a current is not provided to the third coil 622c, the first tooth 621a may not form a polarity.

Referring to operation 605, the processor 120 may control the motor driver IC 540 so that a current is provided to the second coil 622b in the first direction and provided to the third coil 622c in the second direction. When a current is provided to the second coil 622b in the first direction, the second tooth 621b may form the first polarity. When a current is provided to the third coil 622c in the second direction, the third tooth 621c may form the second polarity. The second tooth 621b forming the first polarity may attract the second permanent magnet 611b of the rotor 610 by attraction and push the first permanent magnet 611a of the rotor 610 by repulsion. The third tooth 621c forming the second polarity may attract the first permanent magnet 611a of the rotor 610 by attraction and push the second permanent magnet 611b of the rotor 610 by repulsion. The rotor 610 may be rotated by the attraction and repulsion. Since a current is not provided to the first coil 622a, the first tooth 621a may not form a polarity.

Referring to operation 606, the processor 120 may control the motor driver IC 540 so that a current is provided to the first coil 622a in the first direction and provided to the third coil 622c in the second direction. When a current is provided to the first coil 622a in the first direction, the first tooth 621a may form the first polarity. When a current is provided to the third coil 622c in the second direction, the third tooth 621c may form a second polarity. The first tooth 621a forming the first polarity may attract the second permanent magnet 611b of the rotor 610 by attraction and push the first permanent magnet 611a of the rotor 610 by repulsion. The third tooth 621c forming the second polarity may attract the first permanent magnet 611a of the rotor 610 by attraction and push the second permanent magnet 611b of the rotor 610 by repulsion. The rotor 610 may be rotated by the attraction and repulsion. Since a current is not provided to the second coil 622b, the first tooth 621a may not form a polarity.

As described above, as operations 601 to 606 are repeatedly performed, the motor 361 may be rotated counterclockwise. When rotating the motor 361 in a clockwise direction, the processor 120 may provide a current in a direction opposite to that in operations 601 to 606.

For example, the plurality of hall sensors 623 may be disposed at the stator 620 to identify a position of the permanent magnet 611 included in the rotor 610. For example, the motor 361 may include a first hall sensor 623a disposed between the first tooth 621a and the second tooth 621b, a second hall sensor 623b disposed between the first tooth 621a and the third tooth 621c, and/or a third hall sensor 623c disposed between the second tooth 621b and the third tooth 621c. However, it is not limited thereto. The plurality of hall sensors 623 may provide a signal indicating a position of the rotor 610. For example, the plurality of hall sensors 623 may be configured to provide a high (1) signal when facing the first polarity (e.g., N pole) and be configured to provide a low (0) signal when facing the second polarity (e.g., S pole). However, it is not limited thereto.

Referring to FIGS. 6B and 6C, in operation 601, since the first hall sensor 623a faces the second permanent magnet 611b, the first signal provided from the first hall sensor 623a may indicate low (0). Since the second hall sensor 623b and the third hall sensor 623c face the first permanent magnet 611a, the second signal provided from the second hall sensor 623b and the third signal provided from the third hall sensor 623c may indicate high (1). In operation 601, the first signal, the second signal, and the third signal provided from the plurality of hall sensors 623 may be indicated as '011'.

In operation 602, the first hall sensor 623a and the second hall sensor 623b may face the second permanent magnet 611b, and the third hall sensor 623c may face the first permanent magnet 611a. The first signal and the second signal may indicate low (0). The third signal may indicate high (1). In operation 602, the first signal, the second signal, and the third signal provided from the plurality of hall sensors 623 may be indicated as '001'.

In operation 603, the first hall sensor 623a and the third hall sensor 623c may face the first permanent magnet 611a, and the second hall sensor 623b may face the second permanent magnet 611b. The first signal and the third signal may indicate high (1). The second signal may indicate low (0). In operation 603, the first signal, the second signal, and the third signal provided from the plurality of hall sensors 623 may be indicated as '101'.

In operation 604, the first hall sensor 623a may face the first permanent magnet 611a, and the second hall sensor 623b and the third hall sensor 623c may face the second permanent magnet 611b. The first signal may indicate high (1). The second signal and the third signal may indicate low (0). In operation 604, the first signal, the second signal, and the third signal provided from the plurality of hall sensors 623 may be indicated as '100'.

In operation 605, the first hall sensor 623a and the second hall sensor 623b may face the first permanent magnet 611a, and the third hall sensor 623c may face the second permanent magnet 611b. The first signal and the second signal may indicate high (1). The third signal may indicate low (0). In operation 605, the first signal, the second signal, and the third signal provided from the plurality of hall sensors 623 may be indicated as '110'.

In operation 606, the first hall sensor 623a and the third hall sensor 623c may face the second permanent magnet 611b, and the second hall sensor 623b may face the first permanent magnet 611a. The first signal and the third signal may indicate low (0). The second signal may indicate high (1). In operation 606, the first signal, the second signal, and the third signal provided from the plurality of hall sensors 623 may be indicated as '010'.

Back electromotive force (EMF) refers to a voltage formed by changing the magnetic flux of the coil 622 of the stator 620 by the rotation of the rotor 610 including the permanent magnet 611. For example, when approaching the first permanent magnet 611a having the first polarity (e.g., N pole) and moving away from the second permanent magnet 611b having the second polarity (e.g., S pole), back electromotive force of the second polarity may be formed. For example, when moving away from the first permanent magnet 611a and approaching the second permanent magnet 611b, back electromotive force of the first polarity may be formed. The back electromotive force of the first polarity may be indicated by a positive (+) sign, and the back electromotive force of the second polarity may be indicated by a negative (-) sign.

Referring to FIGS. 6B and 6D, when the rotor 610 rotates 360 degrees, a waveform of the back electromotive force may be indicated as a trapezoidal shape.

For example, in operation 601, the first tooth 621a may move away from the first permanent magnet 611a and may approach the second permanent magnet 611b. The reverse electromotive force (+) of the first polarity may be formed at the first tooth 621a. The second tooth 621b may move away from the second permanent magnet 611b and may approach the first permanent magnet 611a. The back electromotive force (-) of the second polarity may be formed at the second tooth 621b. The third tooth 621c may face the first permanent magnet 611a. The back electromotive force may not be formed at the third tooth 621c.

For example, in operation 602, the back electromotive force may not be formed at the first tooth 621a. The back electromotive force (-) of the second polarity may be formed at the second tooth 621b. The back electromotive force (+) of the first polarity may be formed at the third tooth 621c.

For example, in operation 603, the back electromotive force (-) of the second polarity may be formed at the first tooth 621a. The back electromotive force may not be formed at the second tooth 621b. The back electromotive force (+) of the first polarity may be formed at the third tooth 621c.

For example, in operation 604, the back electromotive force (-) of the second polarity may be formed at the first tooth 621a. The back electromotive force (+) of the first polarity may be formed at the second tooth 621b. The back electromotive force may not be formed at the third tooth 621c.

For example, in operation 605, the back electromotive force may not be formed at the first tooth 621a. The back electromotive force (+) of the first polarity may be formed at the second tooth 621b. The back electromotive force (-) of the second polarity may be formed at the third tooth 621c.

For example, in operation 606, the back electromotive force (+) of the first polarity may be formed at the first tooth 621a. The back electromotive force may not be formed at the second tooth 621b. The back electromotive force (-) of the second polarity may be formed at the third tooth 621c.

For example, the processor 120 may identify a rotational angle of the rotor 610 through a signal provided from the plurality of hall sensors and back electromotive force formed at each of the plurality of teeth 621. When the rotor 610 rotates 360 degrees, the signal provided from the first hall sensor 623a, the second hall sensor 623b, and/or the third hall sensor 623c and/or the back electromotive force formed at each of the plurality of teeth 621 are shown in Table 1 below.

[Table 1]

| Operation | A Plurality of hall sensors 623 | | | A plurality of teeth 621 | | |
|---|---|---|---|---|---|---|
| | First hall sensor | Second hall sensor | Third hall sensor | First tooth | Second tooth | Third tooth |
| Operation 601 | 1 | 1 | 0 | +1 | -1 | 0 |
| Operation 602 | 1 | 0 | 0 | 0 | -1 | +1 |
| Operation 603 | 1 | 0 | 1 | -1 | 0 | +1 |
| Operation 604 | 0 | 0 | 1 | -1 | +1 | 0 |
| Operation 605 | 0 | 1 | 1 | 0 | +1 | -1 |
| Operation 606 | 0 | 1 | 0 | +1 | 0 | -1 |

For example, the processor 120 may identify a rotational angle of the rotor 610 rotated by external force, through the plurality of hall sensors 623. When the rotor 610 is rotated, each of the plurality of hall sensors 623 may provide the signal 1 or the signal 0 to the processor 120. The processor 120 may identify the rotational angle of the rotor 610, based on the signal provided from the plurality of hall sensors 623. Since the rotational angle of the rotor 610 substantially match the rotational angle of the motor 361, the rotational angle of the rotor 610 may be referred to as the rotational angle of the motor 361.

For example, the processor 120 may be configured to identify a movement distance in which the second housing part (e.g., the second housing part 220 of FIG. 2A) is moved by external force, based on the rotational angle of the rotor 610, and identify external force based at least in part on the rotational speed of the rotor 610 and the movement distance. For example, when the second housing part 220 is moved by the external force, the rotor 610 may be rotated. When the rotor 610 be rotated, the processor 120 may identify the rotational angle of the rotor 610 and the rotational speed of the rotor 610, through the plurality of hall sensors 623 and/or the back electromotive force formed at the plurality of teeth 621. The rotational angle of the rotor 610 may be substantially the same as the rotational angle of the motor 361. The processor 120 may calculate the external force by identifying the amount of change in the momentum of the second housing part 220 and the display (e.g., the display 230 of FIG. 2A), based on a movement distance of the second housing part 220 corresponding to the predetermined rotational angle of the rotor 610. An operation of the processor 120 identifying the external force will be described later. The processor 120 may control the motor 361 so that the motor 361 has a holding torque greater than or equal to the identified external force. Since the motor 361 has the holding torque, the second housing part 220 may be fixed without being moved by the external force. Since the second housing part 220 is not moved by the external force, the user may stably use the electronic device 101. In an embodiment, the electronic device 101 may not include a mechanical structure (e.g., stopper) and an electrical structure (e.g., electronic brake) for fixing a position of the second housing part 220, so that a weight of the electronic device 101 may be lightened and a structure of the electronic device 101 may be simplified.

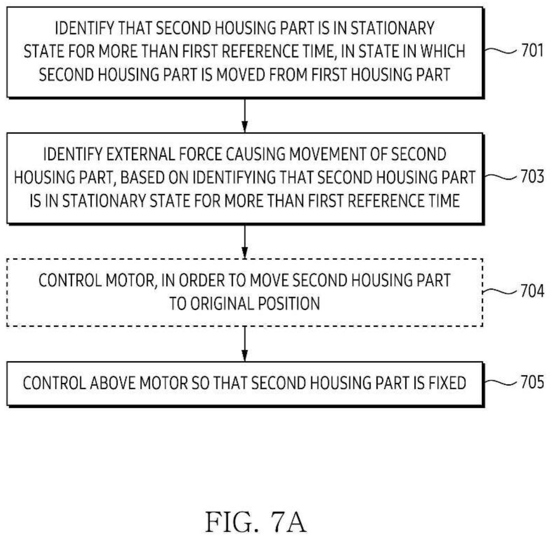

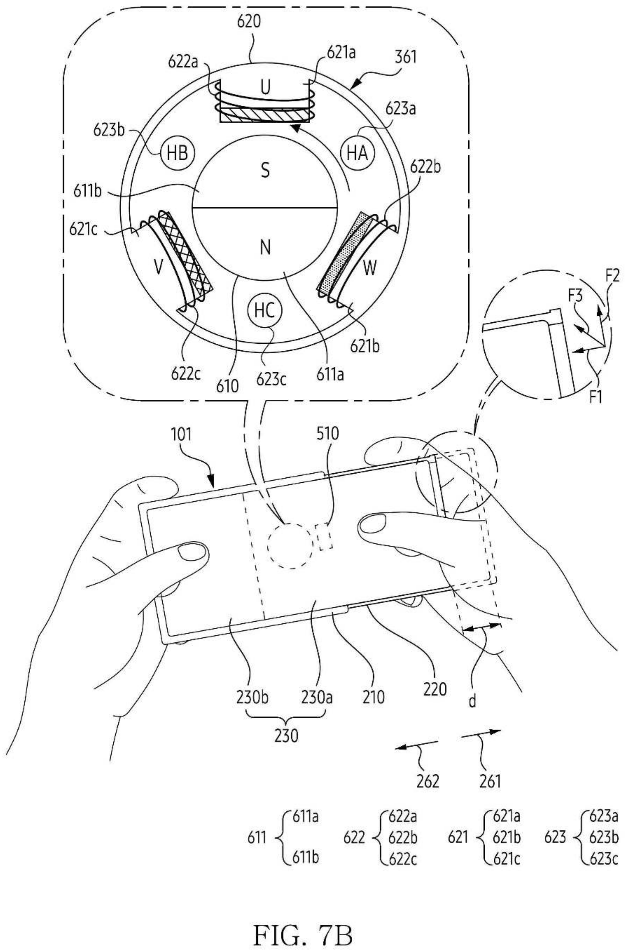

FIG. 7A is a flowchart illustrating an example of an operation of an exemplary electronic device for fixing a housing. FIG. 7B illustrates an embodiment of an electronic device in an environment of use.

Referring to FIGS. 7A and 7B, in operation 701, a processor (e.g., the processor 120 of FIG. 5A) may identify that a second housing part 220 is in a stationary state for more than a first reference time, in a state that the second housing part 220 is moved from a first housing part 210. For example, the moved state may be referred to as a stationary state, as the second housing part 220 completes a movement from the first housing part 210 in a first direction 261.

For example, referring to FIG. 7B, a user may use the electronic device 101 in a state where the second housing part 220 is moved from the first housing part 210 in the first direction 261, in order to expand a display area of the display 230. For example, the user may hold and use the electronic device 101 in the second state by hands. In the second state, since at least a part of the second area (e.g., the second area 230b of FIG. 4B) of the display 230 is extracted from the first housing part 210, the display area of the display 230 may be expanded.

For example, the processor 120 may identify a state in which the second housing part 220 is moved in the first direction 261 from the first housing part 210. For example, the electronic device 101 may include a first sensor (e.g., the first sensor 510 of FIG. 5A). The first sensor 510 may be configured to obtain data related to a movement of the second housing part 220. The first sensor 510 may provide the data to the processor 120. The processor 120 may identify a distance at which the second housing part 220 is moved with respect to the first housing part 210, by using the first sensor 510. The first sensor 510 may include at least one of a proximity sensor, an illuminance sensor, a distance sensor, a magnetic sensor, a hall sensor, and/or an infrared sensor, or a combination thereof. For example, the first sensor 510 may be a hall sensor disposed between the first housing part 210 and the second housing part 220, and the second housing part 220 may include a magnetic material causing Hall-effect. When the second housing part 220 is moved, the first sensor 510 may provide the processor 120 with data related to the movement of the second housing part 220, by detecting movement of a magnetic material. The processor 120 may identify a location of the second housing part 220 based on the data provided from the first sensor 510. The first sensor 510 described above is merely exemplary and is not limited thereto.

For example, the processor 120 may identify a state in which the second housing part 220 is moved from the first housing part 210, through the first sensor 510. For example, the processor 120 may identify whether the electronic device 101 is in an intermediate state or a second state. The processor 120 may be configured to identify that the second housing part 220 is in a stationary state for more than a first reference time, in the intermediate state or the second state. For example, the processor 120 may identify the stationary state of the second housing part 220 (i.e., identify that the second housing part 220 is in the stationary state), by identifying a state in which the motor 361 is stationary without rotating for more than the first reference time. The stationary state of the motor 361 may be identified through the plurality of hall sensors 623 included in the motor 361 and/or the back electromotive force formed at the plurality of teeth 621. For example, the processor 120 may identify the stationary state of the second housing part 220, by identifying that a change in the movement distance of the second housing part 220 provided through the first sensor 510 is less than or equal to a specified change in the distance for more than the first reference time. For example, the processor 120 may identify the stationary state of the second housing part 220 by identifying that power provided from the battery 189 to the motor 361 is less than or equal to a certain value for more than the first reference time. However, it is not limited thereto.

In operation 703, the processor 120 may identify external force causing movement of the second housing part 220, based on identifying that the second housing part 220 is in the stationary state for more than a first reference time.

Referring to FIG. 7B, when the user uses the electronic device 101, an unintended external force may be applied to the second housing part 220 by the user's hand. The external force may be a combined force F3 of a force F1 facing in the second direction 262 and a force F2 perpendicular to the second direction 262. A substantial portion of the external force causing the movement of the second housing part 220 may correspond to the force F1 facing in the second direction 262. For example, when the magnitude of the force F1 facing in the second direction 262 is greater than a back drive force of the motor 361 and a repulsive force of the display 230, the second housing part 220 may be moved in the second direction 262 by the external force. The repulsive force of the display 230 is a force that at least a part of the bendable second area 230b attempts to be unfolded, and may be referred to as a force required to bend at least a part of the second area 230b. When the second housing part 220 is moved in the second direction 262 by the external force, the motor 361 may be rotated by the movement of the second housing part 220.

For example, the processor 120 may be configured to identify the external force causing the movement of the second housing part 220 when the second housing part 220 is moved by the external force in the state where the second housing part 220 is stationary for more than a first reference time. For example, when the second housing part 220 is moved, the processor 120 may identify a rotational angle of the rotor 610 through the plurality of hall sensors 623 and/or the back electromotive force formed at the plurality of teeth 621. The processor 120 may calculate the external force by identifying the amount of change in the momentum of the second housing part 220, through a movement distance of the second housing part 220 corresponding to a predetermined rotational angle of the rotor 610 and the mass of the second housing part 220. The operation of the processor 120 to identify the external force will be described later.

In operation 705, the processor 120 may control the motor 361 so that the second housing part 220 is fixed.

For example, the processor 120 may control a force required to rotate the motor 361. For example, the processor 120 may be configured to control a holding torque of the motor 361 by controlling the intensity and direction of a current provided to the first coil 622a, the second coil 622b, and/or the third coil 622c. As the holding torque of the motor 361 is controlled, the force required to rotate the rotor 610 may be changed. The processor 120 may effectively prevent additional movement of the second housing part 220 by the external force, by controlling the motor 361 so that the motor 361 has a holding torque greater than magnitude of the identified external force. For example, in case that the motor 361 has a holding torque greater than the external force, even when the external force is additionally applied to the second housing part 220, the second housing part 220 may be fixed without moving in the second direction. While the second housing part 220 is fixed, the user may stably use the electronic device 101. The electronic device 101 according to an embodiment may provide stable usability to a user. As a movement of the second housing part 220 due to an unintended force is effectively prevented, the user experience may be enhanced. The electronic device 101 may not include a mechanical structure (e.g., stopper) and an electrical structure (e.g., electronic brake) for fixing a position of the second housing part 220, so that a weight of the electronic device 101 may be lightened and a structure of the electronic device 101 may be simplified. According to an embodiment, since the electronic device 101 does not continuously control the motor 361 so that the motor 361 has a strong holding torque, and controls the motor 361 so that the motor 361 has a holding torque of a second magnitude set based on a first magnitude of external force, power consumption for the holding torque may be reduced. For example, the processor 120 may control the motor 361 so that power provided to the motor 361 is not continuous and is provided in the form of a pulse width modulation (PWM).

For example, operation 704 may be added between operation 703 and operation 705. For example, in operation 704, the processor 120 may control the motor 361 in order to move the second housing part 220 to the original position. The original position may be referred to as a position of the second housing part 220 before the second housing part 220 is moved by the external force.

For example, the processor 120 may identify a distance d at which the second housing part 220 is moved by the external force. For example, the processor 120 may identify the distance d at which the second housing part 220 is moved by the external force, through the plurality of hall sensors 623 and/or back electromotive force formed at the plurality of teeth 621. For example, the processor 120 may identify the distance d of the second housing part 220 moved by the external force through the first sensor 510. The processor 120 may identify the distance d of the second housing part 220 moved in a direction (e.g., the second direction 262) by the external force.

The processor 120 may control the motor 361 so that the second housing part 220 is moved to the original position before controlling the motor 361 so that the second housing part 220 is fixed. For example, the processor 120 may move the second housing part 220 by the distance d moved by the external force, by controlling the motor 361. For example, the processor 120 may control the motor 361 so that the second housing part 220 is moved by the distance d moved in another direction (e.g., the first direction 261) opposite to the direction. In operation 704, the second housing part 220 may compensate for the distance d moved by an unintended external force. The processor 120 may fix the second housing part 220 by performing operation 705, after the second housing part 220 is moved to the original position. For example, operation 704 may be omitted. For example, whether the processor 120 performs operation 704 may be determined in advance.

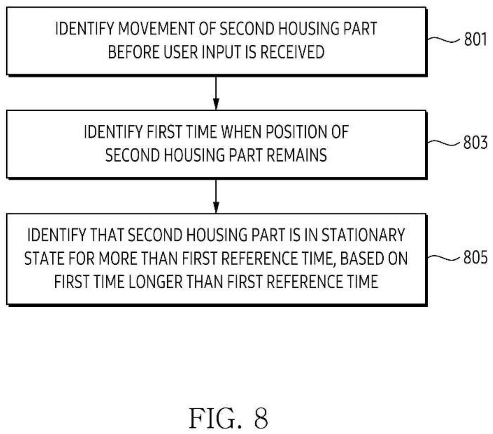

FIG. 8 is a flowchart illustrating an example of an operation of identifying that an electronic device is a stationary state. Operations of FIG. 8 may correspond to as an example of specific operations of operation 701 of FIG. 7A.

In operation 801, a processor (e.g., the processor 120 of FIG. 5A) may identify a movement of a second housing part (e.g., the second housing part 220 of FIG. 2A) before a user input is received.

For example, the user input may include a user input set to move the second housing part 220. For example, a user may enter a preset user input to move the second housing part 220 in a first direction (e.g., the first direction 261 of FIG. 2A) or a second direction (e.g., the second direction 262 of FIG. 2A). A motor (e.g., the motor 361 of FIG. 5A) may be rotated to move the second housing part 220 in the first direction 261 or the second direction 262 based on the user input. As described above, in response to the user input, the motor 361 may operate using power provided from a battery (e.g., the battery 189 of FIG. 5A). The user input may be intended by the user.

For example, 'movement of the second housing part 220 before the user input is received' may be referred to as movement of the second housing part 220 in a state that the user input is not received. For example, when external force unintended by the user is applied to the second housing part 220 in a state in which a user input is not received, the second housing part 220 may be moved by the external force. For example, in a state that the user input is not provided, the processor 120 may identify the movement of the second housing part 220 through a plurality of hall sensors (e.g., the plurality of hall sensors 623 of FIG. 6A) included in the motor 361 and/or back electromotive force formed at a plurality of teeth (e.g., the plurality of teeth 621 of FIG. 6A). For example, in a state that a user input is not provided, the processor 120 may identify the movement of the second housing part 220 through a first sensor (e.g., the first sensor 510 of FIG. 5A). However, it is not limited thereto.

In operation 803, the processor 120 may identify the first time when a position of the second housing part 220 remains.

For example, the processor 120 may identify a first time by identifying an interval between a first timing at which the movement of the second housing part 220 is completed by the user input and a second timing at which the second housing part 220 is moved before the user input is received. The first timing may be a timing at which the movement of the second housing part 220 by the user's intention is completed. The second timing may be a timing at which the movement of the second housing part 220 is started by external force not intended by the user. The interval between the first timing and the second timing may be a first time when the position of the second housing part 220 is maintained. The processor 120 may reduce undesired power consumption spent to continuously measure the first time, by identifying the first time through the interval between the first timing and the second timing.

In operation 805, the processor 120 may identify that the second housing part 220 is in a stationary state for more than a first reference time, based on the first time longer than the first reference time. For example, the first reference time may be a reference time for identifying a case in which external force intended by a user is applied to the second housing part 220.

For example, the processor 120 may compare the first time with the first reference time. For example, when the second housing part 220 is moved by an unintended external force while the user uses an electronic device (e.g., the electronic device 101 of FIG. 5A) in the second state, the processor 120 may compare the first time with the first reference time so that operation 703 of FIG. 7A is triggered.

For example, when the first time is shorter than the first reference time, operation 703 may not be triggered. For example, in order for the user to change the electronic device 101 from the first state to the second state, before the electronic device 101 becomes the second state after providing a user input, the movement of the second housing part 220 may be intentionally prevented. For example, in order for the user to use the electronic device 101 in an intermediate state, the movement of the second housing part 220 may be intentionally prevented. For example, in order for the user to cancel the change to the second state of the electronic device 101, the movement of the second housing part 220 may be intentionally prevented. The processor 120 may not trigger operation 703 when the first time is shorter than the first reference time, so that the second housing part 220 is not fixed when a force intended by the user is applied.

For example, when the first time is longer than the first reference time, the processor 120 may identify that the second housing part 220 has been moved by external force unintended by the user. For example, in order for the user to use the electronic device 101 in the second state, a user input may be provided. While the user uses the electronic device 101 in the second state, an unintended external force may be applied to the second housing part 220. In the above-described case, since the electronic device 101 is maintained in the second state for a certain time, the first time may be longer than the first reference time. The processor 120 may be configured to trigger the operation 703 based on identifying the first time longer than the first reference time, so that the second housing part 220 is fixed when external force unintended by the user is applied to the second housing part 220. When external force intended by the user is applied according to operation 801, operation 803, and operation 803, a situation in which the second housing part 220 is fixed may be reduced.

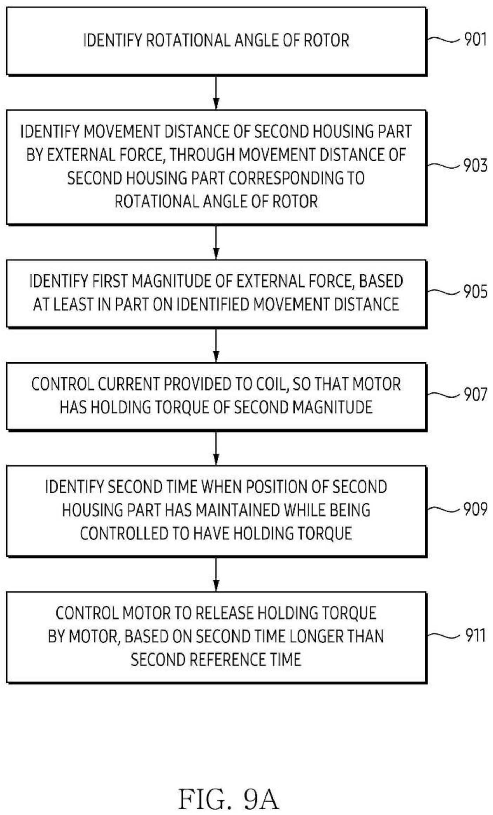

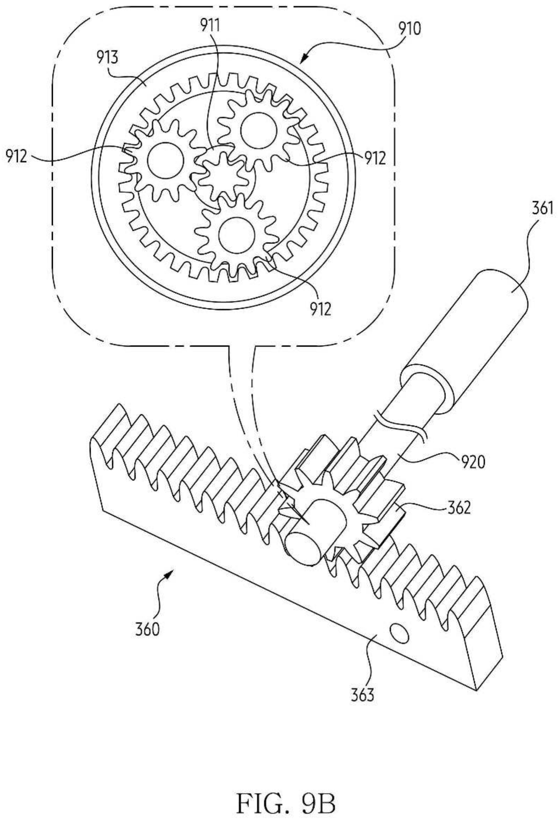

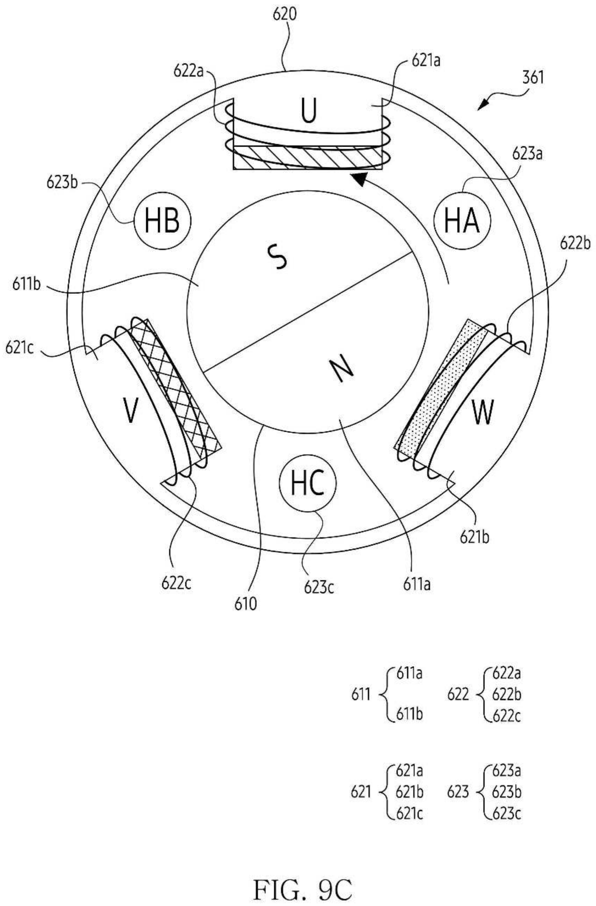

FIG. 9A is a flowchart illustrating an example of an operation of an electronic device for fixing a housing. FIG. 9B illustrates an embodiment of a driving mechanism. FIG. 9C illustrates a state in which a motor is controlled to have a holding torque.

Hereinafter, an operation for a processor (e.g., the processor 120 of FIG. 5A) to identify external force and fix a second housing part (e.g., the second housing part 220 of FIG. 2A) based on the identified external force will be described.

In operation 901, the processor 120 may identify a rotational angle of a rotor (e.g., the rotor 610 of FIG. 6A). For example, the processor 120 may identify a rotational angle of the rotor 610 through a plurality of hall sensors (e.g., the plurality of hall sensors 623 of FIG. 6A) and/or a back electromotive force formed at a plurality of teeth (e.g., the plurality of teeth 621 of FIG. 6A).

In operation 903, the processor 120 may identify a movement distance of the second housing part 220 by external force, through a movement distance of the second housing part 220 corresponding to the rotational angle of the rotor 610.

Referring to FIG. 9B, an embodiment of the electronic device 101 may include a driving mechanism 360. An embodiment of the driving mechanism 360 may include a motor 361, a shaft 920 coupled to a rotating axis of the motor 361, a pinion gear 362 coupled to the shaft 920, and a rack gear 363 engaged with the pinion gear 362. For example, the driving mechanism 360 may be referred to as the driving mechanism 360 illustrated in FIGS. 4A and 4B.

For example, a movement distance of the second housing part 220 corresponding to the rotational angle of the rotor 610 may be determined in advance. For example, the processor 120 may identify the movement distance of the second housing part 220 through information on the movement distance of the second housing part 220 based on the rotational angle of the rotor 610.

For example, the motor 361 may include a reduction gear 910. For example, the reduction gear 910 may include a sun gear 911, a plurality of planetary gears 912, and a ring gear 913. As the sun gear 911 rotates, the plurality of planetary gears 912 may rotate and revolve. The ring gear 913 may be rotated by the plurality of planetary gears 912. By the reduction gear 910, the rotational angle of the rotor 610 transmitted to the pinion gear 362 may be decelerated. For example, the reduction ratio may be 1:36, but is not limited thereto.

For example, the pinion gear 362 may be rotated based on the rotation of the rotor 610. The rack gear 363 may be moved in a first direction or a second direction based on the rotation of the pinion gear 362. When the rack gear 363 is moved in a first direction (e.g., the first direction 261 of FIG. 2A) by the pinion gear 362, the second housing part 220 may be moved in the first direction 261. When the rack gear 363 is moved in a second direction (e.g., the second direction 262 of FIG. 2A) by the pinion gear 362, the second housing part 220 may be moved in the second direction 262.

For example, the processor 120 may identify the rotational angle of the rotor 610 through a plurality of hall sensors (e.g., the plurality of hall sensors 623 of FIG. 6A) and/or back electromotive force formed at a plurality of teeth (e.g., the plurality of teeth 621 of FIG. 6A). The processor 120 may identify a movement distance of the second housing part 220, based on the identified rotational angle of the rotor 610. For example, when the rotor 610 is rotated once, the second housing part 220 may be set to move about 0.24 mm, but is not limited thereto. For example, the processor 120 may identify the movement distance of the second housing part 220 as about 0.48 mm, based on identifying that the rotor 610 is rotated two times. Since a display (e.g., the display 230 of FIG. 2A) is moved by the second housing part 220, a movement distance of the display 230 may be substantially the same as a movement distance of the second housing part 220. For example, when the rotor 610 is rotated once, a movement distance of the display 230 may be about 0.24 mm.

In operation 905, the processor 120 may identify a first magnitude of external force applied to the second housing part 220 based at least in part on the identified movement distance.

For example, the external force may be identified through an amount of change in momentum with respect to time. The external force may be calculated based on [Equation 1] below.

[Equation 1]

$$F = \frac{\Delta P}{\Delta t} = \frac{m \cdot \Delta v}{\Delta t}$$

In [Equation 1], F indicates (or denotes) external force. $\Delta$P indicates the amount of change in the momentum of an object to which the external force is applied. $\Delta$t indicates the amount of change in time causing a change in momentum by the external force. M indicates the mass of the object moved by the external force. $\Delta$v indicates the amount of change in the velocity of the object moved by the external force.

The processor 120 may be configured to identify the external force by calculating the external force based on Equation 1. For example, the second housing part 220 may be moved by the external force. The display 230 supported by the second housing part 220 may be moved based on the movement of the second housing part 220. For example, objects moved by the external force may include the second housing part 220 and the display 230, so the mass in [Equation 1] may be the sum of the mass of the second housing part 220 and the mass of the display 230.

For example, the processor 120 may identify a time when the second housing part 220 is moved by the external force. For example, the processor 120 may identify a time when the rotor 610 is rotated by the movement of the second housing part 220. The processor 120 may identify the time when the rotor 610 is rotated through a signal provided from the plurality of hall sensors 623. The processor 120 may identify the time when the second housing part 220 is moved through a first sensor (e.g., the first sensor 510 of FIG. 5A). The time change amount $\Delta$t in [Equation 1] may be a time when the rotor 610 is rotated or a time when the second housing part 220 is moved.

For example, the processor 120 may identify the velocity of the second housing part 220 due to the external force. For example, since the second housing part 220 is moved by the external force in a state in which the second housing part 220 is stationary for more than a first reference time, the initial velocity may be zero. The processor 120 may identify the rotational velocity of the rotor 610, through the plurality of hall sensors 623 and/or the back electromotive force formed at the plurality of teeth 621. The processor 120 may identify the moving velocity of the second housing part 220 and the display 230 from the rotational speed of the rotor 610. For example, when the second housing part 220 is configured to move about 0.24 mm when the rotor 610 is rotated once, the rotational speed of the second housing part 220 and the display 230 corresponding to the rotational speed of the rotor 610 may be identified. The change amount of the velocity $\Delta v$ in Equation 1 may be a final velocity of the second housing part 220 and the display 230 by the external force. The processor 120 may calculate a first magnitude, which is a magnitude of external force, by substituting the mass, the amount of change in velocity, and the amount of change in time into Equation 1.

In operation 907, the processor 120 may control a current provided to a coil (e.g., the coil 622 of FIG. 6A) so that the motor 361 has a holding torque of a second magnitude.

For example, the processor 120 may control a current provided to the coil 622 so that the motor 361 has a holding torque having a second magnitude greater than or equal to the first magnitude. Referring to FIG. 9C, the rotor 610 including a permanent magnet (e.g., the permanent magnet 611 of FIG. 6A) may be rotated by a current provided to the coils 622 wound around the plurality of teeth 621. According to the polarity formed by the coil 622, each of the plurality of teeth 621 may provide attraction and repulsion to the permanent magnet 611. The processor 120 may control the current provided to the coil 622 so that the motor 361 has the holding torque of the second magnitude.

Referring to FIG. 9C, in a state that the first permanent magnet 611a faces the second tooth 621b, and the second permanent magnet 611b faces the first tooth 621a, the processor 120 may control a current provided to the coil 622 to fix the rotor 610. For example, the processor 120 may control a motor driver IC (e.g., the motor driver IC 540 of FIG. 5A) to provide the first coil 622a with a current in the first direction. The first tooth 621a may attract the second permanent magnet 611b by having a first polarity by a current flowing along the first coil 622a. For example, the processor 120 may control the motor driver IC 540 to provide a current in the second direction to the second coil 622b. The second tooth 621b may attract the first permanent magnet 611a by having a second polarity by a current flowing along the second coil 622b. The rotor 610 may not be rotated and fixed by the attraction between the first tooth 621a and the second permanent magnet 611b facing each other and the attraction between the second tooth 621b and the first permanent magnet 611a facing each other. The intensity of the current provided to the first coil 622a and the second coil 622b may be adjusted so that the holding torque of the motor 361 has the second magnitude greater than or equal to the first magnitude.

For example, even when external force of the first magnitude is applied to the first housing part 210 while the motor 361 has a holding torque of the second magnitude, the motor 361 may be fixed without being rotated. When the motor 361 is fixed, the movement of the second housing part 220 is blocked, so that a position of the second housing part 220 may be maintained. As the position of the second housing part 220 is maintained, the user may stably use the electronic device 101.

In operation 909, the processor 120 may identify a second time when the position of the second housing part 220 has maintained while being controlled to have a holding torque.

For example, the processor 120 may be configured to identify the second time at which a position of the second housing part 220 is maintained, while the motor 361 is controlled to have a holding torque of the second magnitude. When external force of a third magnitude larger than the second magnitude is applied to the second housing part 220, the second housing part 220 may be moved. In the above-described case, as the second housing part 220 is moved, the processor 120 may perform operation 901, operation 903, operation 905, and operation 907 again. For example, the processor 120 may control a current provided to the coil 622 so that the motor 361 has a holding torque greater than the third magnitude.

For example, since the motor 361 is not rotated even when external force of the first magnitude is applied to the second housing part 220 while the motor 361 is controlled to have a holding torque of the second magnitude, a position of the second housing part 220 may be maintained. For example, the processor 120 may identify the second time during which the second housing part 220 is maintained, based on identifying a time when the rotor 610 is stationary through the plurality of hall sensors 623 and/or the back electromotive force formed at the plurality of teeth 621. For example, the processor 120 may identify the second time at which the second housing part 220 is maintained through the first sensor 510.

In operation 911, the processor 120 may control the motor 361 to release the holding torque by the motor 361 based on the second time longer than a second reference time.

For example, the processor 120 may compare the second time with the second reference time. For example, when the second time at which the second housing part 220 is maintained by the holding torque is longer than the second reference time, the processor 120 may cause the holding torque so that the motor 361 releases the holding torque. When the holding torque is not released and is continuously maintained, a current may be continuously provided to the coil 622 in a state that a situation in which external force may be applied to the second housing part 220 is terminated. In a state that fixing of the second housing part 220 by holding torque is not required, as the motor 361 maintains the holding torque, undesired power may be consumed, thereby causing a battery (e.g., the battery 189 of FIG. 5A) to discharge. The processor 120 may control the motor 361 to release the holding torque based on identifying that the second time elapses the second reference time. For example, the processor 120 may release the holding torque by releasing the current provided to the coil 622. For example, undesired power consumption may be reduced by releasing the holding torque in a state that the user ends use of the electronic device 101.

For example, when the second time is less than the second reference time, the processor 120 may control the current provided to the coil 622 so that the motor 361 maintains the holding torque of the second magnitude. For example, since a situation in which external force is applied to the second housing part 220 may occur again when the second time has not elapsed the second reference time, it may be desired for the motor 361 to maintain the holding torque.

In an embodiment, as described above, the processor 120 may control the motor 361 so that the motor 361 has a holding torque for resisting external force. For example, the external force may include a force unintentionally applied by a user, it is not limited thereto. For example, a force that causes movement of the second housing part 220 and is unintended by the user may include the repulsive force of the display 230 according to a temperature of the display 230 and/or a weight applied to the motor 361 according to a posture of the electronic device 101, in addition to the external force. The external force may be a sum of a force applied by a user, a repulsive force of the display 230 according to temperature, and a weight applied to the motor 361. In order to precisely control the motor 361, the processor 120 may control the motor 361 so that the motor 361 has a holding torque based on the repulsive force of the display 230 according to the temperature and gravity.

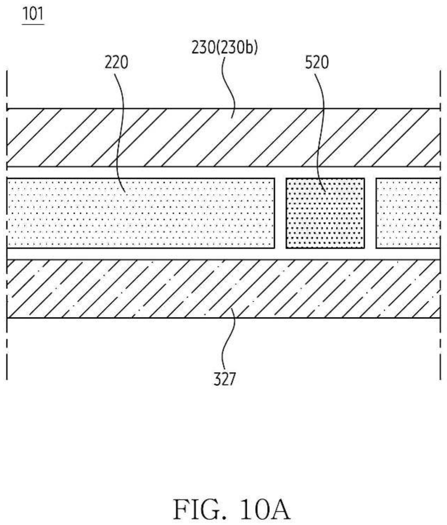

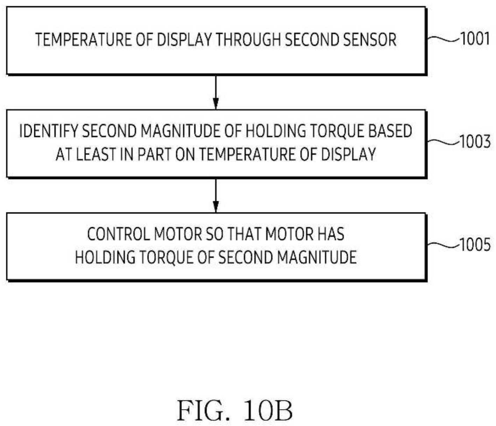

FIG. 10A is a cross-sectional view of an embodiment of an electronic device taken along line C-C' of FIG. 2A. FIG. 10B is a flowchart illustrating an example of an operation of identifying magnitude of a holding torque based at least in part on a temperature of a display.

Referring to FIG. 10A, an embodiment of an electronic device 101 may include a second sensor 520 configured to obtain data related to a temperature of a display 230. For example, the second sensor 520 may include at least one of a resistance temperature sensor, a thermocouple sensor, a non-contact temperature sensor, and/or a digital temperature sensor, or a combination thereof, but it is not limited thereto. For example, the second sensor 520 may obtain data related to the temperature of the display 230 and provide the obtained data to a processor (e.g., the processor 120 of FIG. 5A). However, it is not limited thereto.

Referring back to FIG. 4A, the display 230 may include a first area 230a and a second area 230b. The first area 230a may be a part of the display 230 that is always visually recognized from (or exposed to) the outside, independently of the state of the electronic device 101. For example, regardless of whether the electronic device 101 is in a first state or a second state, the first area 230a may be a flat planar portion. The second area 230b is a bendable part capable of being at least partially deformed according to a movement of the second housing part 220. For example, the display 230 may be coupled to the second housing part 220. For example, the display 230 may be configured to move based on the movement of the second housing part 220.

In the first state, at least a part of the second area 230b may be rolled into the first housing part 210. In the second state, at least a part of the second area 230b may be unfolded. As the display 230 is moved, a position of the second areas 230b may be changed. For example, in the first state, the second areas 230b may be located inside the first housing part 210. For example, in the second state, at least a part of the second area 230b may be located outside the first housing part 210. When the second area 230b is located outside the first housing part 210, the second area 230b is unfolded, so that a display area of the display 230 may be expanded. For example, the first area 230a may correspond to the area 230a of FIG. 2A, and the second area 230b may correspond to the area 230b of FIG. 2C.

For example, as the electronic device 101 is changed from the second state to the first state, at least a part of the second area 230b may be changed from a flat state to a curved state. When at least a part of the flat second areas 230b is curved, the second areas 230b may have a repulsive force. In order for at least a part of the second area 230b to be curved, a force greater than a repulsive force generated in a process in which at least a part of the second area 230b is deformed may be required. Since the display 230 may have different physical properties according to a temperature, the repulsive force may be changed according to the temperature. For example, in a case where a force required to bend at least a part of the second area 230b is 1F at the temperature greater than or equal to about 0°C, the force may increase as the temperature decreases. For example, the 1F may be about 1kgf, but is not limited thereto. For example, at a temperature of about -10°C, a force required to bend at least a part of the second area 230b may be about 3F. For example, at a temperature of about -20°C, a force required to bend at least a part of the second areas 230b may be about 6F. The numerical values above are merely examples and are not limited thereto. Since the force may act for a force resisting movement of the second housing part 220, the processor 120 may identify a magnitude of holding torque required for the motor 361, based on at least a part of data related to the temperature of the display 230.

Referring to FIG. 10B, in operation 1001, a processor (e.g., the processor 120 of FIG. 5A) may identify a temperature of a display (e.g., the display 230 of FIG. 10B) through a second sensor (e.g., the second sensor 520 of FIG. 10A). For example, the second sensor 520 may obtain data related to the temperature of the display 230. The second sensor 520 may provide the data to the processor 120. The temperature of the display 230 is merely an example and it is not limited thereto. For example, the second sensor 520 may provide the processor 120 with data related to the temperature of at least a part of the electronic device 101 different from the display 230.

In operation 1003, the processor 120 may identify the second magnitude of the holding torque based at least in part on the temperature of the display 230.

For example, the processor 120 may be configured to identify the second magnitude of the holding torque, based at least in part on the temperature of the display 230 identified through the second sensor 520. For example, since a force required to bend at least a part of the second area 230b varies according to the temperature, the processor 120 may reflect the temperature of the display 230 when calculating the magnitude of the holding torque. For example, a force required to bend at least a part of the second area 230b may act for a force resisting the external force. For example, since the force required to bend at least a part of the second area 230b at a low temperature is increased, a magnitude of a holding torque may be reduced by the increased force. For example, a magnitude of a holding torque of a motor (e.g., the motor 361 of FIG. 5A) required at a temperature greater than or equal to about 0°C may be greater than a magnitude of a holding torque of the motor 361 required at a temperature of about -10°C. The processor 120 may reduce undesired power consumption by reflecting the temperature of the display 230 when determining the magnitude of the holding torque.

In operation 1005, the processor 120 may control the motor 361 so that the motor 361 has a holding torque having the second magnitude. For example, the processor 120 may control the motor 361 so that the motor 361 has a holding torque of the second magnitude identified in operation 1003, by controlling a current provided to a coil (e.g., the coil 622 of FIG. 6A). When the motor 361 has a holding torque of the second magnitude, the motor 361 may be fixed without being rotated by the sum of the external force of the first magnitude and the repulsive force of the display 230. As the motor 361 is fixed, a position of the second housing part 220 may be maintained. Since a position of the second housing part 220 is not changed, the user using the electronic device 101 may stably use the electronic device 101.

Referring back to FIG. 10A, the second sensor 520 may be adjacent to the display 230. For example, the second sensor 520 may be disposed in the second housing part 220 supporting the display 230. A position of the second sensor 520 in the second housing part 220 may be a position where the display 230 and the second sensor 520 are adjacent. For example, the second sensor 520 may be adjacent to the second area 230b, which is deformed based on a movement of the second housing part 220. When the electronic device 101 is used, heat may be emitted from the electronic components by operating various electronic components (e.g., a camera, flash, speaker, microphone, and/or battery) disposed inside the electronic device 101. When heat emitted from various electronic components affects the second sensor 520, a temperature of the display 230 obtained through the second sensor 520 may not be accurate. To accurately identify the temperature of the display 230, the second sensor 520 may be spaced apart from a plurality of electronic components that emit heat. For example, the second sensor 520 may be disposed on a sub-PCB 327 disposed in the second housing part 220, and other electronic components may not be disposed within a certain interval from a position of the sub-PCB 327 where the second sensor 520 is disposed. Since the electronic components that emit heat are not disposed around the second sensor 520, the accuracy of the temperature of the display 230 obtained through the second sensor 520 may be improved.

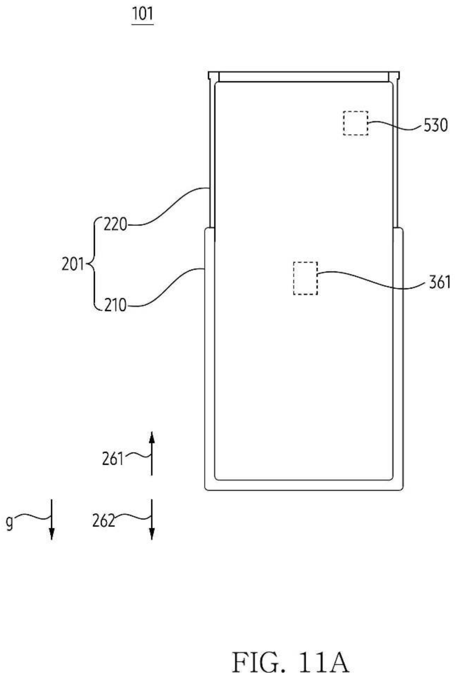

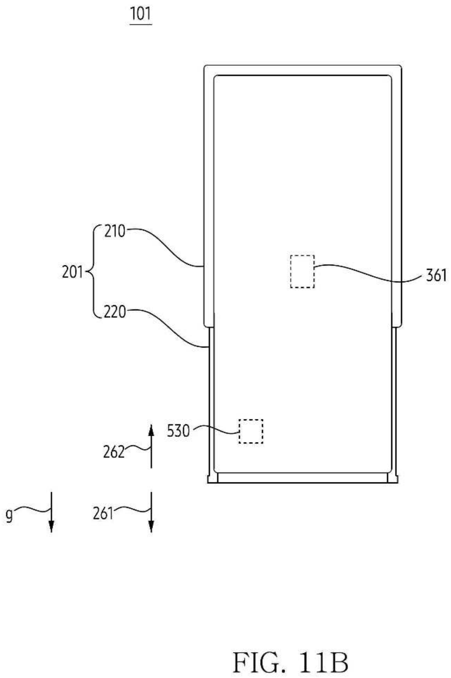

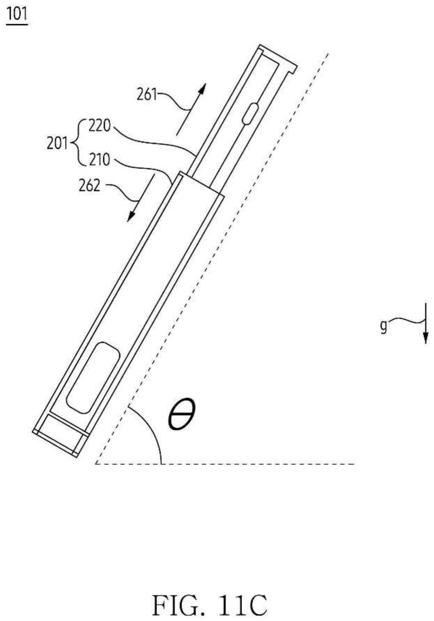

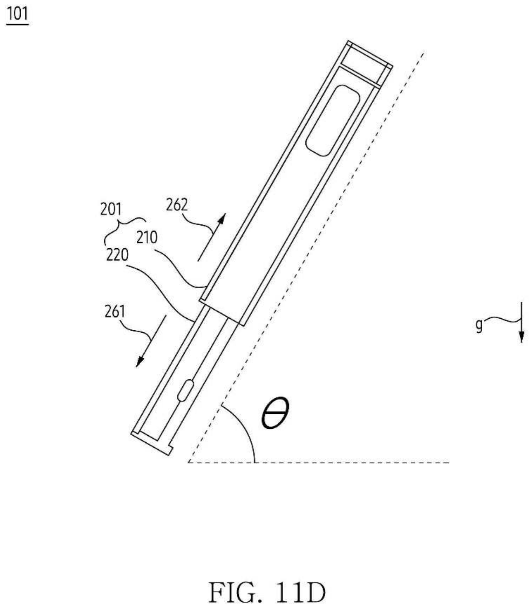

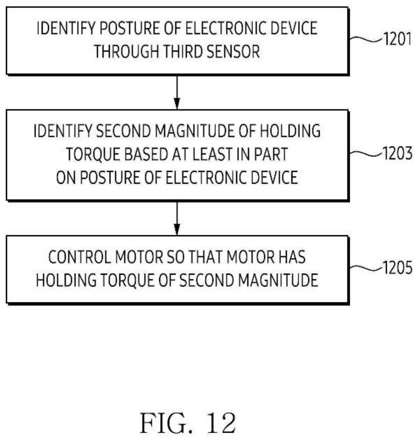

FIGS. 11A, 11B, 11C, and 11D illustrate a posture of an embodiment of an electronic device. FIG. 12 is a flowchart illustrating an example of an operation of identifying magnitude of a holding torque based at least in part on a posture of an electronic device.

Referring to FIG. 11A, an embodiment of an electronic device 101 may include a third sensor 530 configured to obtain data related to a posture of the electronic device 101. For example, the third sensor 530 may include at least one of a mechanical acceleration sensor, a capacitive acceleration sensor, a gyro sensor, and/or a geomagnetic sensor, or a combination thereof, but it is not limited thereto. The third sensor 530 may obtain data related to a posture of the electronic device 101 and provide the obtained data to a processor (e.g., the processor 120 of FIG. 5A).

According to a posture of the electronic device 101, a magnitude and direction of a weight applied to the motor 361 may be different or changed. Since gravity pulls the electronic device 101 in a direction toward a center of mass of the Earth, a direction g of acceleration of gravity may be a direction toward the ground. An angle between a weight applied to the motor 361 and a ground surface may be changed according to a posture of the electronic device 101. For example, in a case where an external force in a second direction 262 is applied to the electronic device 101 in a second state in which the second housing part 220 is moved in a first direction 261 from the first housing part 210. The first direction 261 and the second direction 262 may be relative directions. The first direction 261 may indicate a direction in which the second housing part 220 is extracted from the first housing part 210. The second direction 262 may indicate a direction in which the second housing part 220 is inserted into the first housing part 210. The direction g of the acceleration of gravity may indicate an absolute direction. Since the motor 361 may fix the second housing part 220 by having a holding torque that resists external force and weight, the processor 120 may identify a second magnitude of the holding torque based at least in part on the magnitude and direction of a weight applied to the motor 361.

A posture shown in FIG. 11A may indicate a posture in which a direction of external force and a direction g of gravitational acceleration are the same as each other, and the weight of the second housing part 220 is applied to the motor 361. Since the direction of the external force and the direction g of the gravitational acceleration are the same, a holding torque having a magnitude of the sum of the magnitude of the external force and the weight of the second housing part 220 may be required to fix the second housing part 220. For example, since the motor 361 should resist the weight of the second housing part 220 in the posture, the weight applied to the motor 361 may be the weight of the second housing part 220. For example, a second magnitude of the holding torque required by the motor 361 may be calculated based on Equation 2 below.

[Equation 2]

$$\tau = F + m_2 \cdot g$$

In Equation 2, F indicates external force. m2 indicates the mass of the second housing part 220. G indicates gravitational acceleration.

A posture illustrated in FIG. 11B may indicate a posture in which a direction of external force is opposite to the direction g of gravitational acceleration, and the weight of the first housing part 210 is applied to the motor 361. Since the direction of the external force and the direction g of the gravitational acceleration are opposite to each other, in order to fix the second housing part 220, a holding torque having a magnitude excluding the weight of the first housing part 210 from the magnitude of the external force may be required. For example, since the motor 361 should resist the weight of the first housing part 210 in the posture, the weight applied to the motor 361 may be a weight of the first housing part 210. For example, the second magnitude of the holding torque required by the motor 361 may be calculated based on Equation 3 below.

[Equation 3]

$$\tau = F - m_1 \cdot g$$

In Equation 3, m1 indicates the mass of the first housing part 210.

A posture illustrated in FIG. 11C may indicate a posture in which an angle between the direction of the external force and the ground surface is 0° to 90°, and the weight of the second housing part 220 is applied to the motor 361. Since a slope is formed between the direction of the external force and the direction g of the gravitational acceleration, a holding torque having a magnitude of a sum of the magnitude of the external force and the weight of the second housing part 220 in a direction in which the external force is applied may be required, in order to fix the second housing part 220. For example, since the motor 361 should resist the weight of the second housing part 220 in the posture, the weight applied to the motor 361 may be the weight of the second housing part 220. For example, the second magnitude of the holding torque required to the motor 361 may be calculated based on Equation 4 below.

[Equation 4]

$$\tau = F + m_2 \cdot g \cdot \sin \theta$$

In Equation 4, θ indicates an angle between the direction of the external force and the ground surface.

A posture illustrated in FIG. 11D may indicate a posture in which an angle between the direction of the external force and the ground surface is 0° to 90°, and the weight of the first housing part 210 is applied to the motor 361. Since a slope is formed between the direction of the external force and the direction g of the gravitational acceleration, a holding torque having a magnitude of a sum of the magnitude of the external force and the weight of the first housing part 210 in a direction in which the external force is applied may be required, in order to fix the second housing part 220. For example, since the motor 361 should resist the weight of the first housing part 210 in the posture, the weight applied to the motor 361 may be the weight of the first housing part 210. For example, a second magnitude of the holding torque required to the motor 361 may be calculated based on Equation 5 below.

[Equation 5]

$$\tau = F - m_1 \cdot g \cdot \sin \theta$$

Various postures may be possible in addition to the postures of the electronic device 101 illustrated in FIGS. 11A, 11B, 11C, and 11D. For example, the processor 120 may calculate the second magnitude of a holding torque for fixing the second housing part 220 based at least in part on the posture of the electronic device 101.

Referring to FIG. 12, in operation 1201, a processor (e.g., the processor 120 of FIG. 5A) may identify a posture of an electronic device (e.g., the electronic device 101 of FIG. 11A) through a third sensor (e.g., the third sensor 530 of FIG. 11A).

For example, the third sensor 530 may obtain data related to a posture of the electronic device 101. The third sensor 530 may provide the data to the processor 120. The processor 120 may identify a posture of the electronic device 101 based on the data provided from the third sensor 530. For example, the posture of the electronic device 101 may be referred to as an angle of a housing 201 with respect to a direction (e.g., the direction g of the gravitational acceleration in FIG. 11A) of the gravitational acceleration toward a center of the mass of the Earth.

In operation 1203, the processor 120 may identify the second magnitude of the holding torque based at least in part on the posture of the electronic device 101.

For example, the processor 120 may identify the second magnitude of the holding torque, based on the weight applied to a motor (e.g., the motor 361 of FIG. 11A) according to the identified posture of the electronic device 101 and the external force unintended by the user. For example, when a posture of the electronic device 101 identified through the third sensor 530 is the posture illustrated in FIG. 11A, the processor 120 may identify the second magnitude of the holding torque by calculating the second magnitude of the holding torque based on Equation 2.

In operation 1205, the processor 120 may control the motor 361 so that the motor 361 has a holding torque of the second magnitude. For example, the processor 120 may control the motor 361 so that the motor 361 has a holding torque of the second magnitude identified in operation 1203, by controlling a current provided to a coil (e.g., the coil 622 of FIG. 6A). When the motor 361 has the holding torque of the second magnitude, the motor 361 may be fixed without being rotated by the sum of the external force of the first magnitude and the weight applied to the motor 361. As the motor 361 is fixed, a position of the second housing part 220 may be maintained. Since the position of the second housing part 220 is not changed, the user using the electronic device 101 may stably use the electronic device 101.

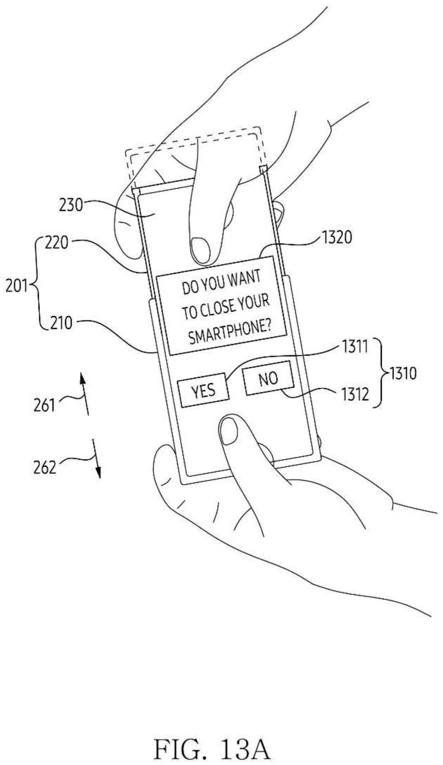

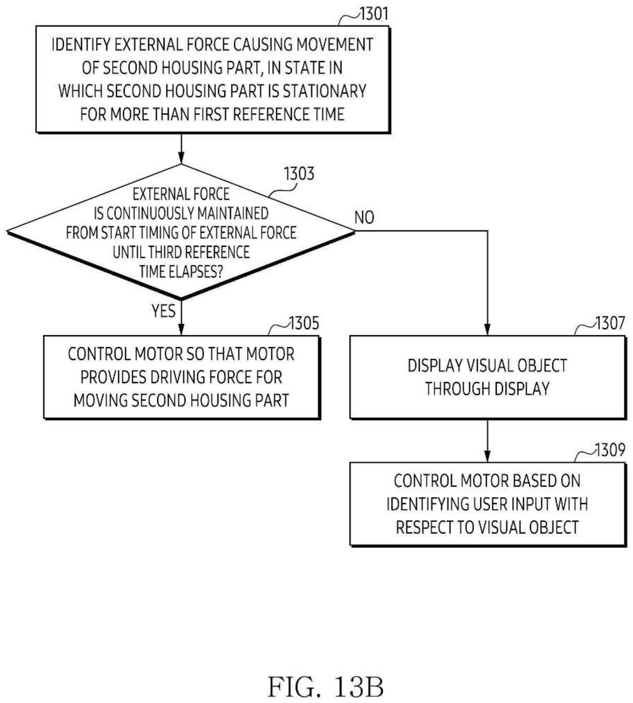

FIG. 13A illustrates an embodiment of an electronic device displaying a visual object through a display. FIG. 13B is a flowchart illustrating an example of an operation of an electronic device when external force is applied.

Referring to FIG. 13A, when external force is applied to a second housing part 220, a processor (e.g., the processor 120 of FIG. 5A) may display a visual object for requesting a user input for an operation of a motor (e.g., the motor 361 of FIG. 5A) through a display 230.

For example, a user input for controlling the motor 361 may include that external force intended by the user is applied for more than a reference time (e.g., a third reference time). For example, when external force facing in a second direction 262 is applied to the second housing part 220 for more than a third reference time in a second state in which the second housing part 220 is moved in a first direction 261, the processor 120 may identify a user input for changing the electronic device 101 from a second state to a first state. For example, a user input for movement of the second housing part 220 may be performed in a semi-automatic manner.

For example, when external force intended by the user is applied to the second housing part 220 and the motor 361 has a holding torque greater than the external force, the second housing part 220 may not be moved. Conversely, when external force unintended by the user is applied to the second housing part 220 and the motor 361 performs an operation for moving the second housing part 220 in the second direction 262, a state of the electronic device 101 may be changed regardless of the user's intention. In order to identify whether the external force applied to the second housing part 220 is a user input intended by the user or external force not intended by the user, a visual object 1310 (e.g., a user interface, a touch point, an icon, and/or a guide message) related to the operation of the motor 361 may be displayed through the display 230. The processor 120 may be configured to control the operation of the motor 361 based on a user input to the visual object.

For example, the visual object 1310 may include content 1320 for confirming the user's intention for the operation of the motor 361. For example, the content 1320 may include text such as "Do you want to close your smartphone?". For example, the visual object 1310 may include a first visual object 1311 and a second visual object 1312 for receiving user input. For example, the first visual object 1311 may be a visual object for receiving a user input indicating a first operation in which the motor 361 provides a driving force for moving the second housing part 220 in the second direction 262. For example, the second visual object 1312 may be a visual object for receiving a user input indicating a second operation in which the motor 361 is controlled to have holding torque. For example, the first visual object 1311 may include text such as "yes", and the second visual object 1312 may include text such as "no". For example, the processor 120 may be configured to identify a user input with respect to the first visual object 1311 or the second visual object 1312 and control an operation of the motor 361 based on the identified user input. The user input may include a touch input for the visual object. However, it is not limited thereto. For example, the processor 120 may identify an input with respect to a visual object using a designated gesture.

Referring to FIG. 13B, in operation 1301, a processor (e.g., the processor 120 of FIG. 5A) may identify the movement of the second housing part 220, in a state in which a second housing part (e.g., the second housing part 220 of FIG. 13A) is stationary for more than the first reference time. For example, operation 1301 may be referred to as operation 701 and operation 703 of FIG. 7A.

In operation 1303, the processor 120 may identify whether the external force is continuously maintained from a start timing of the external force until a third reference time elapses.

For example, in a case of external force unintended by the user, it may be intermittent and irregular. Since the intermittent and irregular external force is not maintained for a certain time, whether the external force is intended by the user may be identified according to whether the external force is maintained for a certain time. For example, the third reference time may be a time for determining whether the user intentionally provides external force. In operation 1303, the processor 120 may identify whether a time during which the external force is maintained is greater than or equal to a third reference time. The processor 120 may perform operation 1305, based on identifying that the external force is continuously maintained until the third reference time elapses from the start timing of the external force from which the external force begins to be provided. The processor 120 may perform operation 1307, based on identifying that the external force is not continuously maintained until the third reference time elapses from the start timing of the external force from which the external force begins to be provided.

In operation 1305, the processor 120 may control the motor 361 so that a motor (e.g., the motor 361 of FIG. 5A) provides a driving force for moving the second housing part 220. The motor 361 may perform a first operation providing the driving force for moving the second housing part 220. The electronic device 101 may be changed from the second state to the first state.

In operation 1307, the processor 120 may display a visual object (e.g., the visual object 1310 of FIG. 13A) through a display (e.g., the display 230 of FIG. 13A). For example, the processor 120 may be configured to display a visual object 1310 for confirming the user's intention for the operation of the motor 361, based on identifying that the external force is released before the third reference time elapses from the start timing of the external force, through the display 230. For example, the processor 120 may display the visual object 1310 illustrated in FIG. 13A through the display 230. The visual object 1310 may include a first visual object (e.g., the first visual object 1311 of FIG. 13A) for receiving a user input indicating the first operation, and a second visual object (e.g., the second visual object 1312 of FIG. 13A) for receiving a user input indicating the second operation.

In operation 1309, the processor 120 may control the motor 361 based on identifying the user input with respect to the visual object 1310. For example, the processor 120 may control the motor 361 so that the motor 361 performs the first operation, based on identifying a user input with respect to the first visual object 1311. The motor 361 may provide a driving force to move the second housing part 220, and the second housing part 220 may be moved by the operation of the motor 361. For example, the processor 120 may control the motor 361 so that the motor 361 performs the second operation based on identifying the user input with respect to the second visual object 1312. The motor 361 may have a holding torque for fixing the second housing part 220, and the second housing part 220 may be fixed by the operation of the motor 361.

In an embodiment, as described above, when external force is applied to the electronic device 101, an operation of the motor 361 may be performed based on whether the external force is intended by the user. Semi-automatic operation may be possible by moving the second housing part 220 by the user's intended continuous external force. When an intermittent external force is applied to the housing 201, the electronic device 101 may provide a stable usability to a user, by performing a moving operation of the second housing part 220 or a fixing operation of the second housing part 220 according to the user's intention.

An operation illustrated in FIG. 13B may be variously performed based on an application being executed by the electronic device 101.

For example, when a game application is being executed, a situation in which the user touches the electronic device 101 with the user's hand may occur repeatedly. In order to reduce malfunction, when the game application is being executed, the third reference time for determining whether it is external force intended by the user may be relatively long. In case that the third reference time is relatively long, since a duration of external force for triggering the first operation is long, an unintended state change of the electronic device 101 by the user may be reduced. For example, while the game application is being executed, a situation in which the second housing part 220 is moved unintentionally by external force may be reduced. For example, when the game application is being executed, the second magnitude of the holding torque may be set to be relatively large. As the magnitude of the holding torque is set relatively large, the second housing part 220 may be stably fixed while the game application is being executed.

In embodiments of the present disclosure, an electronic device 101 may include a housing 210, a driving mechanism 360, memory 130, and a processor 120. The housing 210 may include a first housing part 210 and a second housing part 220 movably coupled to the first housing part 210 and relatively movable with respect to the first housing part 210. The driving mechanism 360 may be configured to provide a driving force for moving the second housing part 220. The memory 130 may include one or more storage media which stores instructions. The processor 120 may be configured to identify external force causing a relative movement of the second housing part 220 with respect to the first housing part 210, in a stationary state in which the first housing part 210 and the second housing part 220 are stationary. The processor 120 may be configured to control the driving mechanism 360 so that the first housing part 210 and the second housing part 220 remain the stationary state, based on the identified external forces. The instructions, when executed by the processor 120, cause the electronic device 101 to identify external force causing a relative movement of the second housing part 220 with respect to the first housing part 210, in a stationary state in which the first housing part 210 and the second housing part 220 are stationary. The instructions, when executed by the processor 120, cause the electronic device 101 to control the driving mechanism, based on the identified external force, so that the first housing part 210 and the second housing part 220 remain the stationary state. According to an embodiment of the present disclosure, since the electronic device 101 does not include a separate mechanical structure and/or electrical structure for fixing the second housing part 220, the electronic device 101 may have a simple structure. Since the electronic device 101 may fix the second housing part 220 based on the external force, undesired power consumption may be reduced.

For example, the electronic device 101 may further include a first sensor 510 configured to provide a signal based on the relative movement of the second housing part 220, to the processor 120. The processor 120 may be configured to identify that the first housing part 210 and the second housing part 220 are in the stationary state when the signal provided from the first sensor 510 is less than a reference value for more than a first reference time, or when a power provided to the driving mechanism 360 is less than a reference value for more than the first reference time.

For example, the driving mechanism 360 may include a motor 361. The processor 120 may be configured to identify a movement by the identified external force. The processor 120 may be configured to fix the second housing part 220, by controlling the motor 361 to have a holding torque having a second magnitude greater than or equal to a first magnitude of the external force identified based on or in relation to the identified movement. The instructions, when executed by the processor 120, cause the electronic device 101 to identify the movement by the identified external force. The instructions, when executed by the processor 120, cause the electronic device 101 to fix the second housing part 220, by controlling the motor 361 to have a holding torque having a second magnitude greater than or equal to a first magnitude of the external force identified based on or in relation to the identified movement.

For example, the motor 361 may include a rotor 610, a stator 620, and a plurality of hall sensors 623. The rotor 610 may include a permanent magnet 611. The stator 620 may include a plurality of teeth 621 around which a coil 622 is wound. The stator 620 may surround the rotor 610. The plurality of hall sensors 623 may be disposed in the stator 620. The processor 120 may be configured to control the motor 361 by controlling a current applied to the coil 622. The instructions, when executed by the processor 120, cause the electronic device 101 to control the motor 361 by controlling a current applied to the coil 622.

For example, the processor 120 may be configured to identify the first magnitude of the external force, based on a value corresponding to a rotational angle of the rotor 610. The instructions, when executed by the processor 120, cause the electronic device 101 to identify the first magnitude of the external force, based on a value corresponding to a rotational angle of the rotor 610.

For example, the processor 120 may be configured to control the current provided to the coil 622 so that the motor 361 has a holding torque of a second magnitude. The instructions, when executed by the processor 120, cause the electronic device 101 to control the current provided to the coil 622 so that the motor 361 has a holding torque of a second magnitude.

An exemplary electronic device 101 may further include a second sensor 520. The second sensor 520 may be configured to obtain data related to temperature of at least a part of the electronic device 101. The processor 120 may be configured to identify a second magnitude of holding torque of the motor 361 for fixing the second housing part 220, based on the data related to temperature of at least a part of the electronic device 101 obtained through the second sensor 520. The instructions, when executed by the processor 120, cause the electronic device 101 to identify a second magnitude of holding torque of the motor 361 for fixing the second housing part 220, based on the data related to temperature of at least a part of the electronic device 101 obtained through the second sensor 520.

An embodiment of the electronic device 101 may further include a third sensor 530 configured to obtain data related to a posture of the electronic device 101. The processor 120 may be configured to identify a second magnitude of holding torque of the motor 361 for fixing the second housing part 220, based at least a part of the data related to a posture of the electronic device 101 identified through the third sensor 530. The instructions, when executed by the processor 120, cause the electronic device 101 to identify a second magnitude of holding torque of the motor 361 for fixing the second housing part 220, based at least a part of the data related to a posture of the electronic device 101 identified through the third sensor 530.

The processor 120 may be configured to control the driving mechanism 360, based on at least one of a received user input or an application running while identifying the external force. The instructions, when executed by the processor 120, cause the electronic device 101 to control the driving mechanism 360, based on at least one of a received user input or an application running while identifying the external force.

For example, the electronic device 101 may further include a display 230. The processor 120 may be configured to control the display 230 to display a first visual object 1311 and a second visual object 1312 for the user input. The processor 120 may be configured to control the driving mechanism 360 to cause the relative movement of the second housing part 220 with respect to the first housing part 210, based on identifying the user input for the first visual object 1311. The processor 120 may be configured to control the driving mechanism 360 so that the first housing part 210 and the second housing part 220 remain the stationary state, based on identifying the user input for the second visual object 1312. The instructions, when executed by the processor 120, cause the electronic device 101 to control the display 230 to display a first visual object 1311 and a second visual object 1312 for the user input. The instructions, when executed by the processor 120, cause the electronic device 101 to control the driving mechanism 360 to cause the relative movement of the second housing part 220 with respect to the first housing part 210, based on identifying the user input for the first visual object 1311. The instructions, when executed by the processor 120, cause the electronic device 101 to control the driving mechanism 360 so that the first housing part 210 and the second housing part 220 remain the stationary state, based on identifying the user input for the second visual object 1312.

An embodiment of a method of operating an electronic device 101 may include identifying external force causing a relative movement of a second housing part 220 of the electronic device 101 with respect to a first housing part 210 of the electronic device 101, in a stationary state in which the first housing part 210 and the second housing part 220 are stationary, and controlling a driving mechanism 360 of the electronic device 101 so that the first housing part 210 and the second housing part 220 remain the stationary state, based on the identified external forces.

The method may further include identifying that the first housing part 210 and the second housing part 220 are in the stationary state when a signal provided from a first sensor 510 of the electronic device 101 is less than a reference value for more than a first reference time, or when a power provided to the driving mechanism 360 is less than a reference value for more than the first reference time.

For example, the method may further include identifying the movement by the identified external force, and fixing the second housing part 220, by controlling a motor 361 of the driving mechanism 360 to have a holding torque having a second magnitude greater than or equal to a first magnitude of the external force identified in relation to the identified movement.

For example, the method may further include controlling the motor 361 by controlling a current applied to a coil 622 of the motor 361.

For example, the method may further include identifying the first magnitude of the external force based on a value corresponding to a rotational angle of a rotor 610 of the motor 361.

For example, the method may further include controlling the current provided to the coil 622 so that the motor 361 has a holding torque of a second magnitude.

For example, the method may further include identifying a second magnitude of holding torque of the motor 361 for fixing the second housing part 220, based on at least a part of data related to temperature of at least a part of the electronic device 101 identified through a second sensor 520 of the electronic device 101.

For example, the method may further include identifying a second magnitude of holding torque of the motor 361 for fixing the second housing part 220, based on at least a part of a posture of the electronic device 101 identified through a third sensor 530 of the electronic device 101.

For example, the method may further include controlling the driving mechanism 360, based on at least one of a user received input or an application running while identifying the external force.

For example, the method may further include controlling a display 230 of the electronic device 101 to display a first visual object 1311 and a second visual object 1312 for the user input, controlling the driving mechanism 360 to cause the relative movement of the second housing part 220 with respect to the first housing part 210, based on identifying the user input for the first visual object 1311, and controlling the driving mechanism 360 so that the first housing part 210 and the second housing part 220 remain the stationary state, based on identifying the user input for the second visual object 1312.

The electronic device according to various embodiments may be one of various types of electronic devices. The electronic devices may include, for example, a portable communication device (e.g., a smartphone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor 120 (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semipermanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server 130 of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The invention should not be construed as being limited to the embodiments set forth herein. Rather, these embodiments are provided so that this disclosure will be thorough and complete and will fully convey the concept of the invention to those skilled in the art.

While the invention has been particularly shown and described with reference to embodiments thereof, it will be understood by those of ordinary skill in the art that various changes in form and details may be made therein without departing from the spirit or scope of the invention as defined by the following claims.

## Claims

1.  An electronic device comprising:

    a housing including:

    a first housing part, and
    a second housing part movably coupled to the first housing part and relatively movable with respect to the first housing part;

    a driving mechanism configured to provide a driving force for moving the second housing part;
    memory comprising one or more storage media which stores instructions; and
    a processor comprising processing circuitry,
    wherein the instructions, when executed by the processor, cause the electronic device to:

    identify an external force, which causes a relative movement of the second housing part with respect to the first housing part, in a stationary state in which the first housing part and the second housing part are stationary; and
    control the driving mechanism, based on the identified external force, in a way such that the first housing part and the second housing part remain the stationary state.

2.  The electronic device of claim 1, further comprising a first sensor configured to provide a signal based on the relative movement of the second housing part, to the processor,
    wherein the instructions, when executed by the processor, cause the electronic device to identify that the first housing part and the second housing part are in the stationary state when the signal provided from the first sensor is less than a reference value for more than a first reference time, or when a power provided to the driving mechanism is less than a reference value for more than the first reference time.

3.  The electronic device of claim 1 or 2,

    wherein the driving mechanism includes a motor, and
    wherein the instructions, when executed by the processor, cause the electronic device to:

    identify the relative movement by the identified external force; and
    fix the second housing part, by controlling the motor to have a holding torque having a second magnitude greater than or equal to a first magnitude of the external force identified based on the identified relative movement.

4.  The electronic device of claim 3,

    wherein the motor includes:

    a rotor including a permanent magnet,
    a stator including a plurality of teeth around which a coil is wound, and surrounding the rotor, and
    a plurality of hall sensors disposed in the stator, and

    wherein the instructions, when executed by the processor, cause the electronic device to control the motor by controlling a current applied to the coil.

5.  The electronic device of claim 4,
    wherein the instructions, when executed by the processor, cause the electronic device to identify the first magnitude of the external force, based on a value corresponding to a rotational angle of the rotor.

6.  The electronic device of claim 4,
    wherein the instructions, when executed by the processor, cause the electronic device to control the current provided to the coil in a way such that the motor has a holding torque of a second magnitude.

7.  The electronic device of any one of claims 1 to 6, further comprising a second sensor configured to obtain data related to a temperature of at least a part of the electronic device,

    wherein the driving mechanism includes a motor, and
    wherein the instructions, when executed by the processor, cause the electronic device to identify a second magnitude of holding torque of the motor for fixing the second housing part, based on at least a part of the data related to the temperature.

8.  The electronic device of any one of claims 1 to 7, further comprising a third sensor configured to obtain data related to a posture of the electronic device,

    wherein the driving mechanism includes a motor, and
    wherein the instructions, when executed by the processor, cause the electronic device to identify a second magnitude of holding torque of the motor for fixing the second housing part, based on at least a part of the data related to a posture of the electronic device.

9.  The electronic device of any one of claims 1 to 8, wherein the instructions, when executed by the processor, cause the electronic device to control the driving mechanism, based on at least one of a user input or an application running while identifying the external force.

10. The electronic device of claim 9, further comprising a display,
    wherein the instructions, when executed by the processor, cause the electronic device to:

    control the display to display a first visual object and a second visual object for the user input;
    control the driving mechanism to cause the relative movement of the second housing part with respect to the first housing part, based on identifying the user input for the first visual object; and
control the driving mechanism so that the first housing part and the second housing part remain the stationary state, based on identifying the user input for the second visual object.

11. A method of operating an electronic device comprising:

identifying an external force causing a relative movement of a second housing part of a housing of the electronic device with respect to a first housing part of the housing of the electronic device, in a stationary state in which the first housing part and the second housing part are stationary; and
controlling a driving mechanism of the electronic device in a way such that the first housing part and the second housing part remain the stationary state, based on the identified external force.

12. The method of claim 11, further comprising identifying that the first housing part and the second housing part are in the stationary state when a signal provided from a first sensor of the electronic device is less than a reference value for more than a first reference time, or when a power provided to the driving mechanism is less than a reference value for more than the first reference time.

13. The method of claim 11 or 12, further comprising:

identifying the relative movement based on the identified external force; and
fixing the second housing part, by controlling a motor of the driving mechanism to have a holding torque having a second magnitude greater than or equal to a first magnitude of the external force identified based on the identified relative movement.

14. The method of claim 13, further comprising controlling the motor by controlling a current applied to a coil of the motor.

15. The method of claim 14, further comprising identifying the first magnitude of the external force based on a value corresponding to a rotational angle of a rotor of the motor.

100

ELECTRONIC DEVICE 101

INPUT MODULE 150

SOUND OUTPUT MODULE 155

DISPLAY MODULE 160

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY 189

POWER MANAGE-MENT MODULE 188

PROCESSOR 120

MAIN PROCESSOR 121

AUXILIARY PROCESSOR 123

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

INTERFACE 177

CONNECTING TERMINAL 178

HAPTIC MODULE 179

CAMERA MODULE 180

SECOND NETWORK 199

ELECTRONIC DEVICE 104

FIRST NETWORK 198

ELECTRONIC DEVICE 102

SERVER 108

FIG. 1

FIG. 2A

FIG. 2B

101

FIG. 2C

101

250-2

220

261

264 263

212a

262

212

210

201 { 210
      220

y
z → x

FIG. 2D

FIG. 3A

101

331

230

313a

361
362    360
363

313

311a

313a

311

212a

212

321    322

220

x  z  y

210 { 311
      212
      313 }

FIG. 3B

FIG. 4A

FIG. 4B

101

FIG. 5A

RECEIVE USER INPUT ~ 501

CONTROL MOTOR SO THAT MOTOR IS
ROTATED BASED ON USER INPUT ~ 503

FIG. 5B

IDENTIFY EXTERNAL FORCE CAUSING RELATIVE MOVEMENT OF SECOND HOUSING PART WITH RESPECT TO FIRST HOUSING PART, IN STATE IN WHICH FIRST HOUSING PART AND SECOND HOUSING PART ARE STATIONARY ~502

CONTROL DRIVING MECHANISM SO THAT FIRST HOUSING PART AND SECOND HOUSING PART REMAIN STATIONARY STATE BASED ON IDENTIFIED EXTERNAL FORCE ~504

FIG. 5C

361

FIG. 6A

FIG. 6B

FIG. 6C

FIG. 6D

IDENTIFY THAT SECOND HOUSING PART IS IN STATIONARY STATE FOR MORE THAN FIRST REFERENCE TIME, IN STATE IN WHICH SECOND HOUSING PART IS MOVED FROM FIRST HOUSING PART ~ 701

IDENTIFY EXTERNAL FORCE CAUSING MOVEMENT OF SECOND HOUSING PART, BASED ON IDENTIFYING THAT SECOND HOUSING PART IS IN STATIONARY STATE FOR MORE THAN FIRST REFERENCE TIME ~ 703

CONTROL MOTOR, IN ORDER TO MOVE SECOND HOUSING PART TO ORIGINAL POSITION ~ 704

CONTROL ABOVE MOTOR SO THAT SECOND HOUSING PART IS FIXED ~ 705

FIG. 7A

FIG. 7B

IDENTIFY MOVEMENT OF SECOND HOUSING PART
BEFORE USER INPUT IS RECEIVED — 801

IDENTIFY FIRST TIME WHEN POSITION OF
SECOND HOUSING PART REMAINS — 803

IDENTIFY THAT SECOND HOUSING PART IS IN STATIONARY
STATE FOR MORE THAN FIRST REFERENCE TIME, BASED ON
FIRST TIME LONGER THAN FIRST REFERENCE TIME — 805

FIG. 8

IDENTIFY ROTATIONAL ANGLE OF ROTOR — 901

IDENTIFY MOVEMENT DISTANCE OF SECOND HOUSING PART BY EXTERNAL FORCE, THROUGH MOVEMENT DISTANCE OF SECOND HOUSING PART CORRESPONDING TO ROTATIONAL ANGLE OF ROTOR — 903

IDENTIFY FIRST MAGNITUDE OF EXTERNAL FORCE, BASED AT LEAST IN PART ON IDENTIFIED MOVEMENT DISTANCE — 905

CONTROL CURRENT PROVIDED TO COIL, SO THAT MOTOR HAS HOLDING TORQUE OF SECOND MAGNITUDE — 907

IDENTIFY SECOND TIME WHEN POSITION OF SECOND HOUSING PART HAS MAINTAINED WHILE BEING CONTROLLED TO HAVE HOLDING TORQUE — 909

CONTROL MOTOR TO RELEASE HOLDING TORQUE BY MOTOR, BASED ON SECOND TIME LONGER THAN SECOND REFERENCE TIME — 911

FIG. 9A

FIG. 9B

FIG. 9C

101

220    230(230b)    520

327

FIG. 10A

TEMPERATURE OF DISPLAY THROUGH SECOND SENSOR ~1001

IDENTIFY SECOND MAGNITUDE OF HOLDING TORQUE BASED AT LEAST IN PART ON TEMPERATURE OF DISPLAY ~1003

CONTROL MOTOR SO THAT MOTOR HAS HOLDING TORQUE OF SECOND MAGNITUDE ~1005

FIG. 10B

FIG. 11A

FIG. 11B

101

FIG. 11C

FIG. 11D

EP 4 718 826 A2

IDENTIFY POSTURE OF ELECTRONIC DEVICE
THROUGH THIRD SENSOR ~1201

IDENTIFY SECOND MAGNITUDE OF HOLDING
TORQUE BASED AT LEAST IN PART
ON POSTURE OF ELECTRONIC DEVICE ~1203

CONTROL MOTOR SO THAT MOTOR HAS
HOLDING TORQUE OF SECOND MAGNITUDE ~1205

FIG. 12

FIG. 13A

IDENTIFY EXTERNAL FORCE CAUSING MOVEMENT OF SECOND HOUSING PART, IN STATE IN WHICH SECOND HOUSING PART IS STATIONARY FOR MORE THAN FIRST REFERENCE TIME ~1301

EXTERNAL FORCE IS CONTINUOUSLY MAINTAINED FROM START TIMING OF EXTERNAL FORCE UNTIL THIRD REFERENCE TIME ELAPSES? 1303

NO

YES

CONTROL MOTOR SO THAT MOTOR PROVIDES DRIVING FORCE FOR MOVING SECOND HOUSING PART ~1305

DISPLAY VISUAL OBJECT THROUGH DISPLAY ~1307

CONTROL MOTOR BASED ON IDENTIFYING USER INPUT WITH RESPECT TO VISUAL OBJECT ~1309

FIG. 13B